# EUROPÄISCHE PATENTSCHRIFT

(11) **EP 4 405 606 B1**
(45) Veröffentlichungstag und Bekanntmachung des Hinweises auf die Patenterteilung: **18.06.2025**
(21) Anmeldenummer: 22785990.7
(22) Anmeldetag: 14.09.2022
(51) Int. Cl.: F16L 37/088

(54) **STECKVERBINDER MIT VORMONTAGESICHERUNG**
PLUG CONNECTOR HAVING A PRE-ASSEMBLY LOCKING
RACCORD MÂLE À VERROUILLAGE DE PRÉ-ASSEMBLAGE

(30) Priorität: 23.09.2021 DE 102021124681
(43) Veröffentlichungstag der Anmeldung: 31.07.2024
(73) Patentinhaber: Voss Automotive GmbH, 51688 Wipperfürth (DE)
(72) Erfinder: HEINRICHS, Eugen, 51702 Bergneustadt (DE); GMEINER, Swen, 51709 Marienheide (DE)
(74) Vertreter: Dr. Solf & Zapf Patent- und Rechtsanwalts PartG mbB
(86) Internationale Anmeldenummer: PCT/EP2022/075513
(87) Internationale Veröffentlichungsnummer: WO 2023/046549

(56) Entgegenhaltungen:
- DE-U1- 202020 101 638
- US-B2- 10 927 992

## Beschreibung

Die Erfindung betrifft einen Steckverbinder zum Verbinden von einer ersten Fluidleitung mit einem Gegensteckverbinder. Der Steckverbinder umfasst ein Gehäuse mit einem Durchgangskanal, wobei ein Ende des Gehäuses als Muffenabschnitt mit einem fluidisch mit dem Durchgangskanal verbundenen Aufnahmekanal zur Aufnahme einer Adapterhülse ausgebildet ist. Die Adapterhülse ist in eine axial zu einer Montageachse gerichtete Montagerichtung in den Aufnahmekanal des Muffenabschnitts einsteckbar und ist lösbar in dem Aufnahmekanal in axialer Richtung formschlüssig gehalten. Die Adapterhülse hat eine Durchgangsöffnung für einen Steckerschaft des Gegensteckverbinders ausgebildet und weist ein Haltemittel zum lösbaren Fixieren des Gegensteckverbinders auf. Das Haltemittel ragt in einem Ruhezustand in die Durchgangsöffnung hinein und ist radial bezogen auf die Montageachse elastisch in einen Spannungszustand aufweitbar ausgebildet. Der Steckerschaft des Gegensteckverbinders ist in einer Vormontagestellung des Steckverbinders in die Durchgangsöffnung der Adapterhülse einführbar, und in einer Montagestellung des Steckverbinders kann das Haltemittel den Gegensteckverbinder axial zur Montageachse blockieren. Zudem weist die Adapterhülse zwei sich um 180 ° gegenüberliegende, in Bezug auf die Montageachse radial geöffnete Fenster auf. Weiterhin ist ein axial zur Montageachse bewegliches Verriegelungselement auf einem Außenumfang des Muffenabschnitts von einer das Haltemittel freigebenden Lösestellung in eine das Haltemittel verriegelnde Verriegelungsstellung beweglich angeordnet. Das Verriegelungselement ist dabei in seiner Lösestellung in der Vormontagestellung des Steckverbinders auf dem Muffenabschnitt zumindest axial gegen eine Bewegung in die Verriegelungsstellung fixiert.

Gegensteckverbinder der genannten Art weisen einen Steckerschaft und eine in Montagerichtung hinter dem Steckerschaft ausgebildete Rastnut auf. Das Haltemittel greift, nachdem der Gegensteckverbinder in den Steckverbinder bzw. in die in dem Gegensteckverbinder angeordnete Adapterhülse eingeführt ist, in die Rastnut des Gegensteckverbinders ein und blockiert eine axiale Bewegung des Gegensteckverbinders gegen die Montagerichtung.

Aus der WO 2015/181396 A1 ist ein Steckverbinder zum Anschluss des Gegensteckverbinders bekannt. Bei diesem Steckverbinder weist die Adapterhülse sich in Montagerichtung erstreckende Rastzungen auf, welche im eingesteckten Zustand in Ausnehmungen in eine Umfangswand des Muffenabschnitts in axialer Richtung formschlüssig rastend eingreifen. Weiterhin weist der besagte Steckverbinder sich gegen die Montagerichtung erstreckende Rastarme auf, welche in die Rastnut des Gegensteckverbinders mit Betätigungsfortsätzen eingreifen und die Bewegung des Gegensteckverbinders gegen die Montagerichtung verhindern.

Als nachteilig hat sich herausgestellt, dass die Rastzungen, welche die Adapterhülse formschlüssig im Muffenabschnitt halten, derart groß dimensioniert werden müssen, dass bei einem vorgegebenen Einbauraum für die Verbindung lediglich eine Umfangsdichtung zur Abdichtung eines Umfangsspalts zwischen einer Innenwandung des Aufnahmekanals und dem Steckerschaft des Gegensteckverbinders angeordnet werden kann. Insbesondere bei Gegensteckverbindern mit einem Steckdurchmesser über 14 mm ist daher die bekannte Ausführung nur eingeschränkt nutzbar.

Weiterhin kann es bei der bekannten Ausbildung bei hohen Innendrücken und Temperaturen gelegentlich zu Leckagen kommen, wenn der Gegensteckverbinder gegen die Montagerichtung aus dem Steckverbinder gedrückt wird. Dies wird beispielsweise durch einen unsachgemäßen Gebrauch und/oder äußere Einflüsse begünstigt. Daher ist die Ausführung gemäß der WO 2015/181396 A hinsichtlich des auftretenden Innendrucks und/oder der auftretenden Temperatur nur begrenzt einsetzbar.

Die WO 2015/181396 A1 sieht zur Vermeidung eines ungewollten Lösens des Gegensteckverbinders ein am Außenumfang des Muffenabschnitts angeordnetes Verriegelungselement vor. Das Verriegelungselement ist axial zur Montageachse verschiebbar angeordnet, wobei das Verriegelungselement in einer Verriegelungsstellung eine radiale Spreizung der Rastarme und dadurch eine Freigabe des Gegensteckverbinders verhindert. Hierbei hat sich gezeigt, dass das Verriegelungselement auch ohne eingesteckten Gegensteckverbinder in die Verriegelungsstellung übergehen kann und ein Einstecken des Gegensteckverbinders verhindert, was den Montageaufwand vergrößert.

Ein weiterer Nachteil sind die Rastarme, welche den Steckerschaft des Gegensteckverbinders zur Wahrung der radialelastischen Eigenschaften über eine bestimmte axiale Länge überdecken, dabei allerdings nur eine geringe flächenmäßige Überdeckung des Gegensteckverbinders bieten. Speziell bei großen Baugrößen und Vibrationen, insbesondere bei Gegensteckverbindern mit einem Steckdurchmesser über 14 mm, kann es daher gelegentlich zu einem Versagen und einem Lösen des Gegensteckverbinders vom Steckverbinder kommen.

Nachteilig hat sich zudem herausgestellt, dass es bei großer Zug- oder Druckbelastung zu Leckagen oder Beschädigungen der Adapterhülse kommen kann.

DE 20 2020 101 638 U beschreibt einen Steckverbinder zum Verbinden von mindestens einer ersten Fluidleitung mit einer mit einem Gegensteckverbinder ausgebildeten zweiten Fluidleitung. Alternativ ist die erste Fluidleitung auch an ein mit einem Gegensteckverbinder ausgebildetes Aggregat anschließbar. Ferner weist der Steckverbinder ein Haltemittel und ein Formschlusselement auf. Auch US 10 927 992 B2 beschreibt einen Steckverbinder mit einem Haltemittel. Sowohl das aus DE 20 2020 101 638 U als auch das aus US 10 927 992 B2 bekannte Haltemittel weisen Haltearme auf. Grundsätzlich haben sich derartige Steckverbinder in der Praxis bewährt, allerdings hat es sich insbesondere bei hohen Zug- und Druckbelastungen gezeigt, dass Verbesserungsbedarf besteht.

Der Erfindung liegt die Aufgabe zugrunde, einen Steckverbinder bereit zu stellen, welcher vorzugsweise mit einem aus dem Stand der Technik bekannten Gegensteckverbinder funktioniert, und welcher die aus dem Stand der Technik bekannten Nachteile überwindet, insbesondere zumindest die Widerstandsfähigkeit gegen Zug- und Druckbelastungen zu verbessern.

Die Aufgabe wird erfindungsgemäß durch die Merkmale des Anspruchs 1 gelöst. Dadurch, dass jeweils eine sich axial zur Montageachse erstreckende Verstärkungsstrebe, insbesondere mittig, in den Fenstern angeordnet ist, wobei das Haltemittel zwei Haltearme aufweist, und mit den Haltearmen jeweils durch die Fenster derart hindurchgreift, dass im Ruhezustand die Haltearme des Haltemittels radial zwischen der Durchgangsöffnung und den Verstärkungsstreben angeordnet sind, so dass das Haltemittel mit den Haltearmen zumindest in der Vormontagestellung in die Durchgangsöffnung der Adapterhülse hineinragt, wird der Steckverbinder, insbesondere die Adapterhülse, zumindest axial zur Montageachse versteift. Die Versteifung hat zudem zur Folge, dass Zug- oder Druckbelastungen gleichmäßiger über den Umfang des Steckverbinders verteilt werden. Insbesondere wird dadurch Leckagen und Beschädigungen vorgebeugt.

**In** einer vorteilhaften Ausführungsform der Erfindung fixiert ein Formschlusselement die Adapterhülse in dem Aufnahmekanal in axialer Richtung zur Montageachse formschlüssig. Insbesondere ragt dabei das Formschlusselement in einem Ruhezustand in die Durchgangsöffnung der Adapterhülse hinein und ist radial bezogen auf die Montageachse elastisch in einen Spannungszustand aufweitbar ausgebildet. Zweckmäßig sind hierbei das Formschlusselement und/oder das Haltemittel mittels einer zumindest radial bezogen auf die Montageachse nach außen wirkenden Kraft aus ihrem jeweiligen Ruhezustand in den Spannungszustand elastisch aufweitbar.

Vorteilhaft ist es mittels dieser Ausführung möglich, dass der Steckerschaft beim Einstecken in die Durchgangsöffnung eine radial nach außen wirkende Kraft auf das Formschlusselement und/oder das Haltemittel ausübt, und dadurch das jeweilige Element beim Einstecken des Gegensteckverbinders in Montagerichtung oder Rückführen gegen die Montagerichtung in einen Spannungszustand und/oder einen Ruhezustand überführt wird.

Bei der Montage wird der Gegensteckverbinder mit seinem Steckerschaft in Montagerichtung in die Durchführöffnung gesteckt. Dabei passiert der Steckerschaft in der Durchgangsöffnung einen Abschnitt, in dem das Haltemittel, und einen Abschnitt, in dem das Formschlusselement angeordnet ist. Vorzugsweise sind der Steckerschaft, das Formschlusselement und das Haltemittel derart zueinander korrespondierend ausgebildet, dass der Steckerschaft eine radial zur Montageachse nach außen auf das Haltemittel und das Formschlusselement wirkende Kraft ausübt, und das Haltemittel und das Formschlusselement dadurch radial nach außen elastisch verformt werden.

In bekannter Weise weist der Gegensteckverbinder hinter dem Steckerschaft eine Rastnut auf, welche einen geringeren Durchmesser aufweist als der Steckerschaft. Zweckmäßig liegt das Haltemittel in der Montagestellung des Steckverbinders benachbart zu der Rastnut eines vollständig eingesteckten Gegensteckverbinders, so dass sich das Haltemittel aus dem aufgeweiteten Spannungszustand im Bereich der Rastnut in den Ruhezustand zurückverformen kann. Vorteilhaft wird dadurch eine axiale Bewegung des Gegensteckverbinders gegen die Montagerichtung formschlüssig blockiert.

Dadurch, dass der Gegensteckverbinder vorteilhafterweise den Spannungszustand und den Ruhezustand des Haltemittels und/oder des Formschlusselements einstellt, ist es möglich, die Einstecktiefe des Gegensteckverbinders während und nach dem Einstecken zu kontrollieren, indem die Zustände des Haltemittels und/oder des Formschlusselements auf den Ruhezustand oder den Spannungszustand kontrolliert werden.

Insbesondere ist das Formschlusselement als Verbindungsklammer ausgebildet und hat zwei Klemmarme ausgebildet. Die Klemmarme ragen im Ruhezustand in die Durchgangsöffnung der Adapterhülse hinein, wobei die Klemmarme einseitig über eine Brücke miteinander verbunden sind. Insbesondere ist das Formschlusselement senkrecht zur Montageachse U-förmig ausgebildet. Die Klemmarme erstrecken sich von der Brücke aus jeweils zu einem freien Ende. Vorzugsweise weisen die freien Enden der Klemmarme jeweils einen Stützkörper auf. Zweckmäßig sind die Stützkörper in einem Durchbruch in dem Muffenabschnitt angeordnet und zumindest einseitig von dem Verriegelungselement übergriffen.

Vorzugsweise weisen der Muffenabschnitt und die Adapterhülse jeweils zumindest einen in Bezug auf die Montageachse radialen Durchbruch auf. Zweckmäßig sind dabei zumindest jeweils ein Durchbruch der Adapterhülse und des Muffenabschnitts in einem fixierten Zustand der Adapterhülse im Muffenabschnitt derart benachbart zueinander angeordnet, dass das Formschlusselement, insbesondere ein als Verbindungsklammer ausgebildetes Formschlusselement, radial zur Montageachse durch die Durchbrüche der Adapterhülse und des Muffenabschnitts hindurch in die Durchgangsöffnung der Adapterhülse eingeführt werden kann.

Zweckmäßig ragt das Formschlusselement im Ruhezustand radial zur Montageachse aus dem Durchbruch der Adapterhülse radial nach außen heraus. Vorteilhaft blockiert dadurch das Formschlusselement im Ruhezustand die Bewegung des Verriegelungselements aus der Lösestellung in die Verriegelungsstellung.

Vorzugsweise sind die radial in Bezug auf die Montageachse geöffneten Fenster axial zur Montageachse von den Durchbrüchen beabstandet angeordnet. Insbesondere sind dabei die Fenster weiterhin um 90 ° zu den Durchbrüchen um die Montageachse versetzt angeordnet.

Insbesondere streben die Haltearme aufgrund ihrer Elastizität stets den Ruhezustand an, weshalb sie aktiv in den Spannungszustand gedrängt werden müssen. Besonders vorteilhaft umgreifen die Haltearme den Gegensteckverbinder, wenn dieser in Einsteckrichtung eingesteckt oder in der Durchgangsöffnung in einem Montagezustand angeordnet ist.

Vorzugsweise sind der Steckerschaft des Gegensteckverbinders und die Durchgangsöffnung zylindrisch ausgebildet. Zweckmäßig weist der Steckerschaft des Gegensteckverbinders einen Durchmesser auf, welcher größer ist als der größte Abstand der Haltearme senkrecht durch die Montageachse im Ruhezustand der Haltearme. Insbesondere ist der größte Abstand der Haltearme senkrecht durch die Montageachse im aufgeweiteten Spannungszustand der Haltearme identisch mit dem Durchmesser des Steckerschafts.

In einer weiteren Ausführung weisen die Haltearme zumindest einen Kontaktabschnitt auf. Zweckmäßig weisen die Haltearme jeweils einen Kontaktabschnitt auf. Der Kontaktabschnitt ist vorteilhaft jeweils in einer korrespondierend ausgebildeten Kontaktnut angeordnet, Zweckmäßig sind die Kontaktnuten dabei von jeweils einem Kontaktelement gebildet. Insbesondere sind die Kontaktelemente an einem, die radial zur Montageachse geöffneten Fenster voneinander trennenden, Wandabschnitt ausgebildet. Die Kontaktnuten sind vorteilhaft radiale Abstütz- und Halteelemente für die Haltearme, so dass die Haltearme sich in den Kontaktnuten zumindest radial zur Montageachse abstützen und einhaken können und dadurch in einer Einbaulage in bzw. an der Adapterhülse gehalten werden.

Zweckmäßig steht das Haltemittel radial zur Montageachse mit einem Betätigungsmittel von einem Außenumfang der Adapterhülse nach außen ab beziehungsweise ragt aus dem Durchbruch aus der Adapterhülse heraus. Insbesondere ist dabei der maximale radiale Abstand des Betätigungsmittels zum Außenumfang der Adapterhülse im Ruhezustand größer als in dem Spannungszustand. Besonders vorteilhaft kann durch eine von außen radial auf das Betätigungsmittel wirkende Kraft das Haltemittel aus dem Ruhezustand in den aufgeweiteten Spannungszustand elastisch verformt werden, wobei insbesondere das Betätigungsmittel gegenüberliegend zu den Kontaktnuten angeordnet ist. Vorteilhaft stützt sich dabei das Haltemittel radial zur Montageachse mit dem Kontaktabschnitt in der Kontaktnut ab. Durch die von außen radial wirkende Kraft wird das Haltemittel gestaucht und aus dem Ruhezustand in den aufgeweiteten Spannungszustand elastisch verformt. Dadurch wird der maximale Abstand der Haltearme durch die Montageachse derart vergrößert, dass dieser Abstand mindestens dem Durchmesser des Steckerschafts des Gegensteckverbinders entspricht.

Wenn der Gegensteckverbinder nicht derart weit genug in Montagerichtung in die Durchgangsöffnung eingesteckt ist, dass die Rastnut nicht benachbart zu dem Haltemittel angeordnet ist, blockiert das Haltemittel im Spannungszustand, zweckmäßig mit dem Betätigungsmittel, die Bewegung des Verriegelungselements von der Lösestellung in die Verriegelungsstellung. Eine Blockade der Bewegung des Verriegelungselements in die Verriegelungsstellung hat den Vorteil, dass der Anwender eine zusätzliche Einsteckkontrolle hat.

Um vorteilhaft ein ungewolltes Trennen des Gegensteckverbinders von dem Steckverbinder zu verhindern, greift das Verriegelungselement mit mindestens einem axial von dem Verriegelungselement gegen die Montagerichtung hervorstehenden Dorn im Montagezustand in einen Freiraum hinein. Der Freiraum ist zweckmäßig axial zwischen dem Betätigungsmittel und der Adapterhülse durchführend ausgebildet. Vorteilhaft wird dadurch das Haltemittel radial zu der Montageachse im Ruhezustand fixiert, und eine radial von außen in Richtung der Montageachse wirkende Kraft kann das Haltemittel nicht aus dem Ruhezustand in den Spannungszustand versetzen.

Besonders vorteilhaft ist in dem Aufnahmekanal mindestens ein Dichtungselement, vorzugsweise mindestens zwei Dichtungselemente, angeordnet. Vorteilhaft ist das Dichtungselement als O-Ring ausgebildet. Zweckmäßig ist das Dichtungselement zwischen einer in Montagerichtung weisenden Seitenwand der Adapterhülse und einer gegen die Montagerichtung weisenden und sich senkrecht von einer Innenwandung des Aufnahmekanals erstreckenden Stufenfläche angeordnet. Vorzugsweise dichtet das Dichtungselement dabei insbesondere gegen eine Innenwandung des Aufnahmekanals ab.

Als besonders vorteilhaft hat sich eine dreiteilige Dichtung herausgestellt, wobei die Verwendung dieser Dichtung erst durch den erfindungsgemäßen Steckverbinder möglich ist. Die Dichtung weist demnach vorteilhaft zwei Dichtungselemente, insbesondere O-Ringe, auf, welche mit einem Distanzring voneinander getrennt sind. Dieser dreiteilige Verbund wird dann wie zuvor genannt angeordnet.

Weitere vorteilhafte Ausgestaltungen der Erfindung ergeben sich aus der folgenden Figurenbeschreibung und den abhängigen Unteransprüchen.

Es zeigen:
- Fig. 1: eine Explosionsansicht eines Steckverbinders,
- Fig. 2: eine perspektivische Ansicht des Steckverbinders aus Figur 1,
- Fig. 3: eine perspektivische Ansicht eines Gehäuses des Steckverbinders aus Figur 1,
- Fig. 4: eine perspektivische Ansicht einer Adapterhülse des Steckverbinders aus Figur 1,
- Fig. 5: eine Aufsicht entgegen einer Montagerichtung M auf die Adapterhülse des Steckverbinders gemäß Figur 4,
- Fig. 6: eine perspektivische Ansicht eines Formschlusselements des Steckverbinders aus Figur 1,
- Fig. 7: eine perspektivische Ansicht eines Haltemittels des Steckverbinders aus Figur 1,
- Fig. 8: eine Schnittansicht längs der Montageachse X gemäß Figur 1 durch den Steckverbinder in einer Vormontagestellung des Steckverbinders mit einem bis zu dem Haltemittel eingesteckten Gegensteckverbinder,
- Fig. 9: eine Schnittansicht längs der Montageachse X gemäß Figur 1 durch den Steckverbinder in einer Zwischenstellung des Steckverbinders mit einem bis zu dem Formschlusselement eingesteckten Gegensteckverbinder,
- Fig. 10: eine Schnittansicht längs der Montageachse X durch den Steckverbinder in seiner Zwischenstellung gemäß Figur 9 in einer zu der Figur 9 um 90 ° um die Montageachse X gedrehten Ansicht,
- Fig. 11: eine Schnittansicht durch den Steckverbinder entlang der Trennlinie A-A gemäß Figur 9,
- Fig. 12: eine Schnittansicht längs der Montageachse X gemäß Figur 1 durch den Steckverbinder in einer Zwischenstellung des Steckverbinders mit einem bis zu einem Dichtungselement eingesteckten Gegensteckverbinder,
- Fig. 13: eine Schnittansicht längs der Montageachse X durch den Steckverbinder in seiner Zwischenstellung gemäß Figur 12 in einer zu der Figur 12 um 90 ° um die Montageachse X gedrehten Ansicht,
- Fig. 14: eine Schnittansicht längs der Montageachse X gemäß Figur 1 durch den Steckverbinder in einer Montagestellung des Steckverbinders mit vollständig eingestecktem Gegensteckverbinder,
- Fig. 15: eine Schnittansicht längs der Montageachse X durch den Steckverbinder in seiner Montagestellung gemäß Figur 14 in einer zu der Figur 14 um 90 ° um die Montageachse X gedrehten Ansicht,
- Fig. 16: eine Schnittansicht durch den Steckverbinder entlang der Trennlinie B-B gemäß Figur 14,
- Fig. 17: eine Aufsicht senkrecht zur Montageachse X auf den Steckverbinder in seiner Montagestellung gemäß Figur 15 und
- Fig. 18: eine Detailansicht des Bereichs D in Figur 15.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

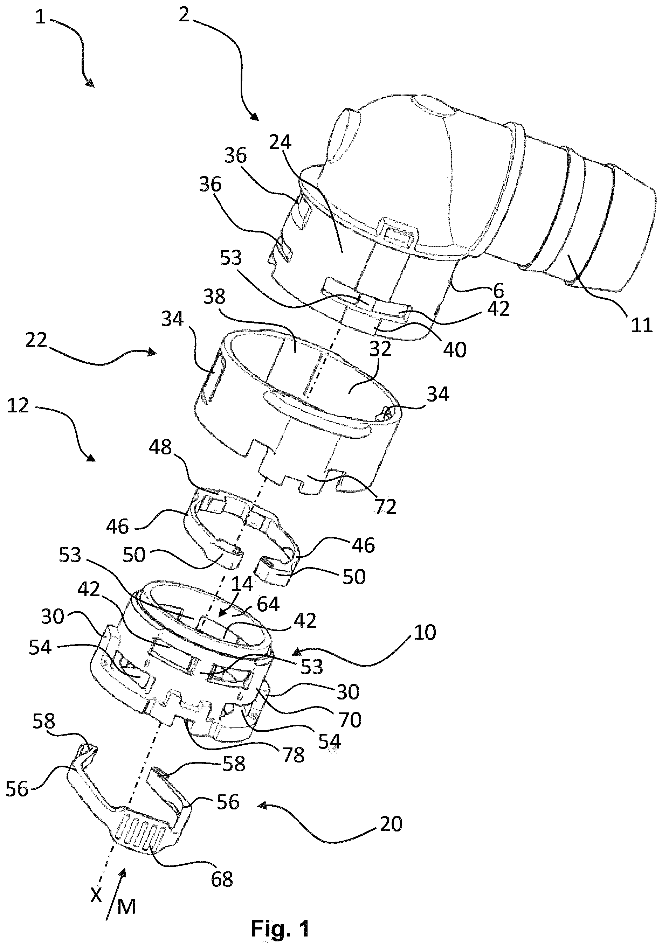

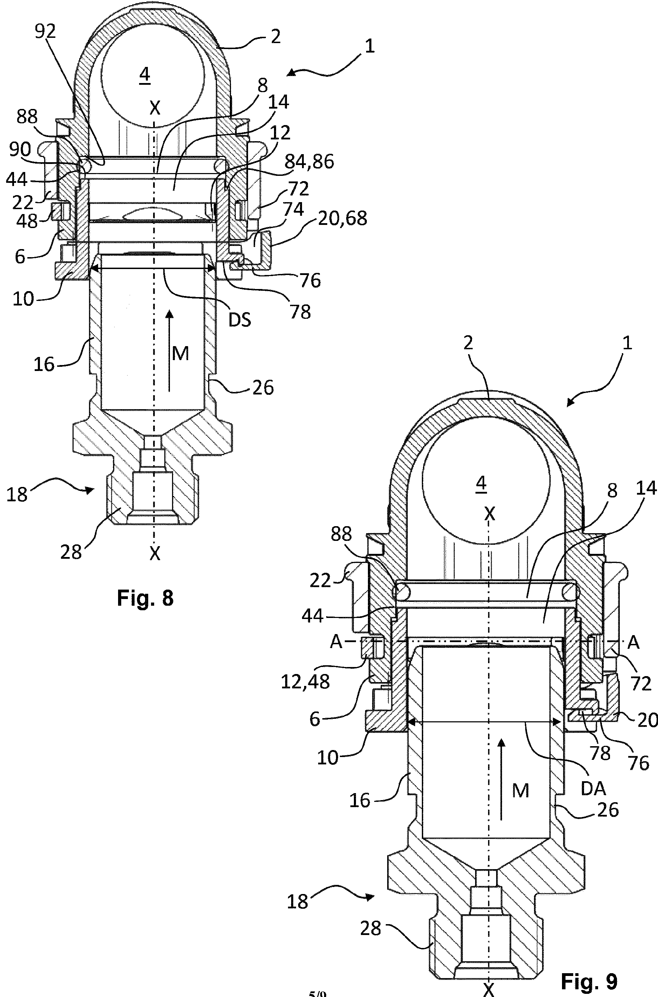

Figur 1 zeigt einen Steckverbinder 1 zum Verbinden von einer ersten Fluidleitung mit einem Gegensteckverbinder 18. Zweckmäßig ist der Gegensteckverbinder 18 an einer zweiten Fluidleitung oder an einem Aggregat ausgebildet. Der Steckverbinder 1 umfasst ein Gehäuse 2, siehe Figuren 1 bis 3, mit einem in den Figuren 8 bis 10 und 12 bis 15 dargestellten Durchgangskanal 4.

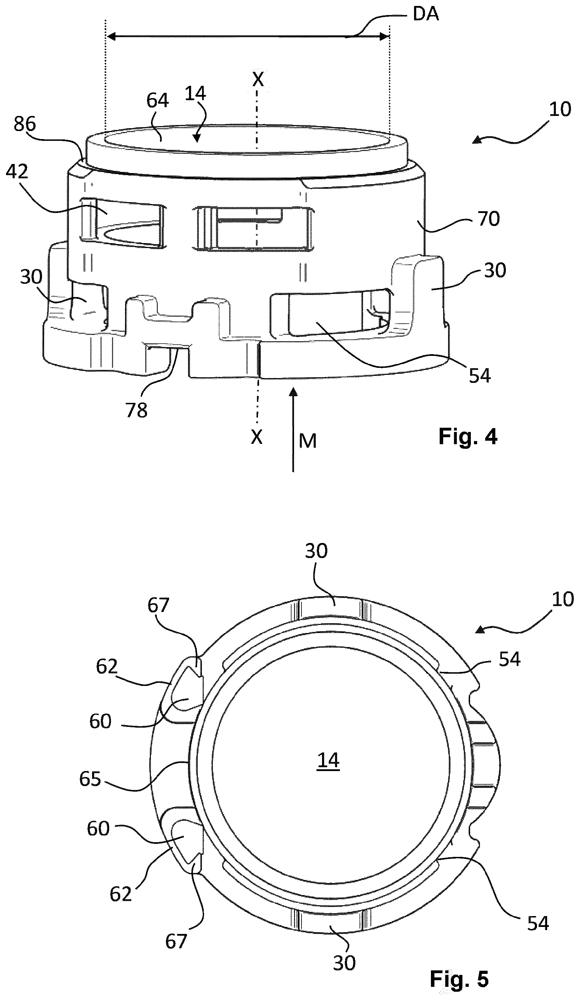

Entsprechend der Darstellung in den Figuren 1 bis 3 ist ein Ende des Gehäuses 2 als Muffenabschnitt 6 mit einem fluidisch mit dem Durchgangskanal 4 verbundenen Aufnahmekanal 8 zur Aufnahme einer, in den Figuren 1 und 4 dargestellten, Adapterhülse 10 ausgebildet.

Ebenfalls ist in den Figuren 1 bis 3 dargestellt, dass das Gehäuse 2 an dem dem Muffenabschnitt 6 gegenüberliegenden Ende vorzugsweise einen Steckabschnitt 11 z. B. zum Aufstecken der ersten Fluidleitung oder eines Leitungsverbinders aufweist. Dieser Steckabschnitt 11 kann aber auch als eine Muffe zum Einstecken einer Fluidleitung ausgebildet sein. Weiterhin kann das Gehäuse 2 an dem dem Muffenabschnitt 6 gegenüberliegenden Ende einen zweiten Muffenabschnitt aufweisen, welcher eines oder mehrere Merkmale des Muffenabschnitts 6 dieser Erfindung aufweist. Alternativ kann das Gehäuse 2 an dem dem Muffenabschnitt 6 gegenüberliegenden Ende unmittelbar an einem Aggregat angeschlossen bzw. mit diesem kraft- und/oder form- und/oder stoffschlüssig verbunden sein.

Der Steckverbinder 1 kann weiterhin als Winkelsteckverbinder, wie in Figur 1 dargestellt, ausgebildet sein. Alternativ kann der Steckverbinder 1 zwischen dem Muffenabschnitt 6 und dem gegenüberliegenden Ende nicht abgewinkelt sein, oder es können beliebige Winkel zwischen dem Muffenabschnitt 6 und dem gegenüberliegenden Ende ausgebildet sein. Ebenfalls ist ein T-förmiger oder Y-förmiger Steckverbinder 1 möglich. Insbesondere ist hierbei mindestens ein Ende und maximal jedes Ende als Muffenabschnitt 6 ausgebildet.

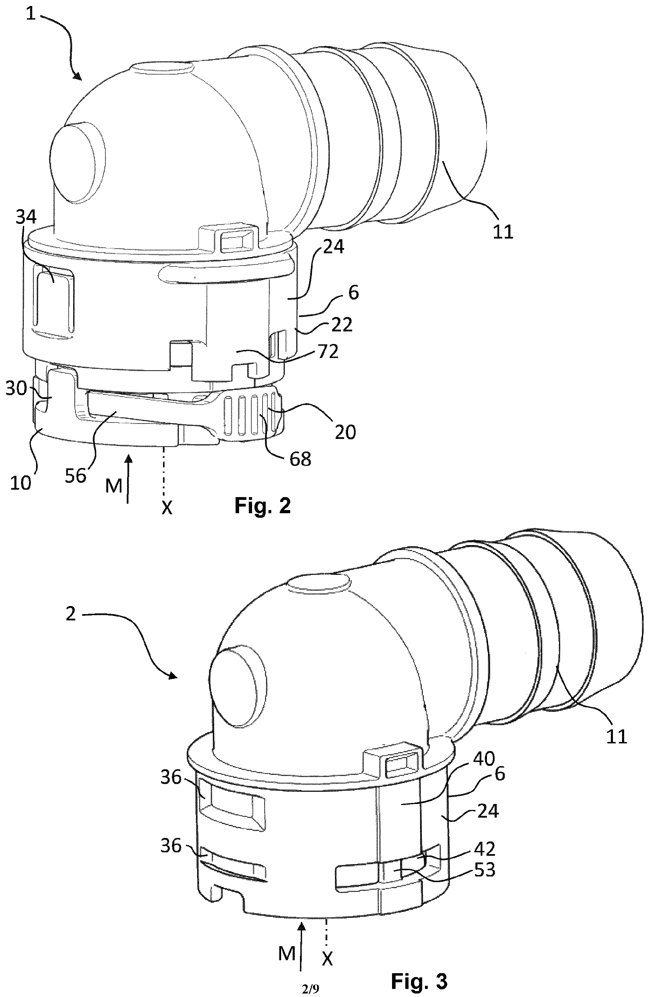

Die Adapterhülse 10 ist in eine axial zu einer Montageachse X gerichtete Montagerichtung M in den Aufnahmekanal 8 des Muffenabschnitts 6 einsteckbar. Die Figuren 2 und 8 bis 17 zeigen eine in dem Aufnahmekanal 8 des Muffenabschnitts 6 angeordnete Adapterhülse 10.

Die Adapterhülse 10 ist in den Figuren 1, 4 und 5 dargestellt und ist lösbar in dem Aufnahmekanal 8 in axialer Richtung formschlüssig gehalten. Entsprechend Figur 5 hat die Adapterhülse 10 eine Durchgangsöffnung 14 für einen Steckerschaft 16 des Gegensteckverbinders 18 ausgebildet. Der Gegensteckverbinder 18 ist zur Veranschaulichung der Funktionsweise in den Figuren 8 bis 10 und 12 bis 15 dargestellt.

Weiterhin weist die Adapterhülse 10 zwei sich gegenüberliegende, in Bezug auf die Montageachse X radial geöffnete Fenster 54 auf. Insbesondere dienen die Fenster 54 der Aufnahme und Durchführung des Haltemittels 20.

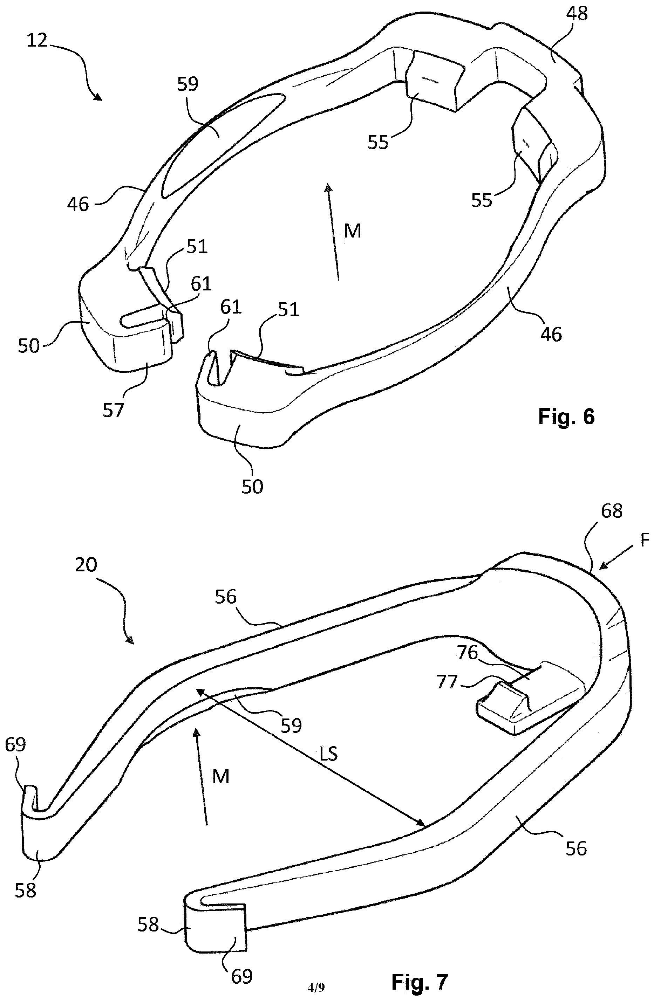

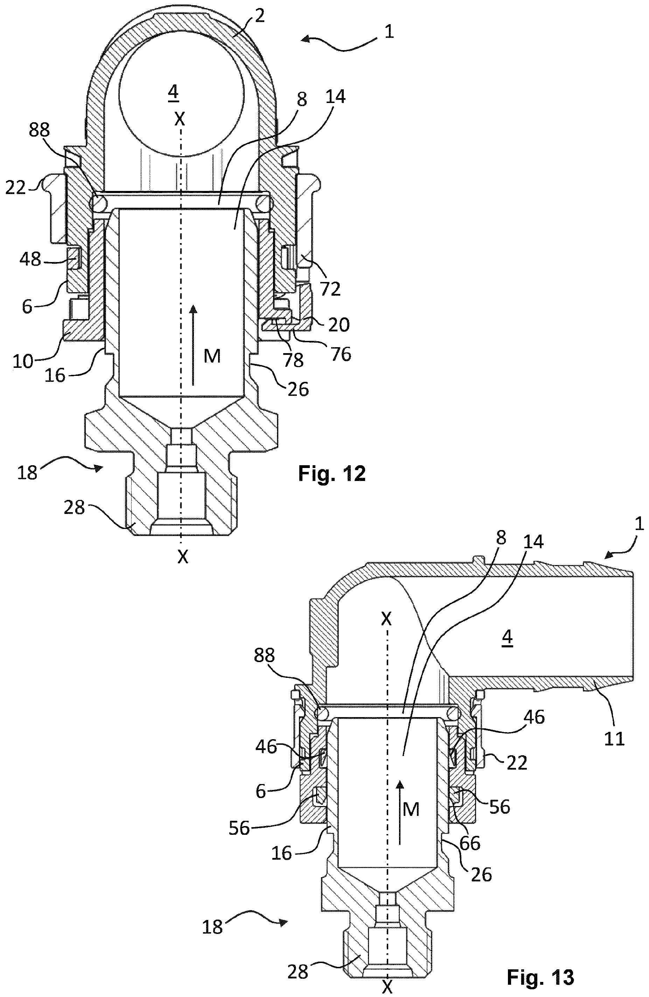

Weiterhin weist die Adapterhülse 10 ein in den Figuren 1 und 7 dargestelltes Haltemittel 20 zum lösbaren Fixieren des Gegensteckverbinders 18 auf, wobei das Haltemittel 20 in einem Ruhezustand in die Durchgangsöffnung 14 hineinragt und radial bezogen auf die Montageachse X elastisch in einen Spannungszustand aufweitbar ausgebildet ist. Die Figuren 9 und 12 zeigen das Haltemittel 20 in einem Spannungszustand. Im Gegensatz dazu ist in den Figuren 7, 8, und 14 bis 16 das Haltemittel 20 in einem Ruhezustand dargestellt.

Zweckmäßig kann das Haltemittel 20 aus Kunststoff, Metall, Hybridwerkstoff oder einem umspritzten Draht ausgebildet sein.

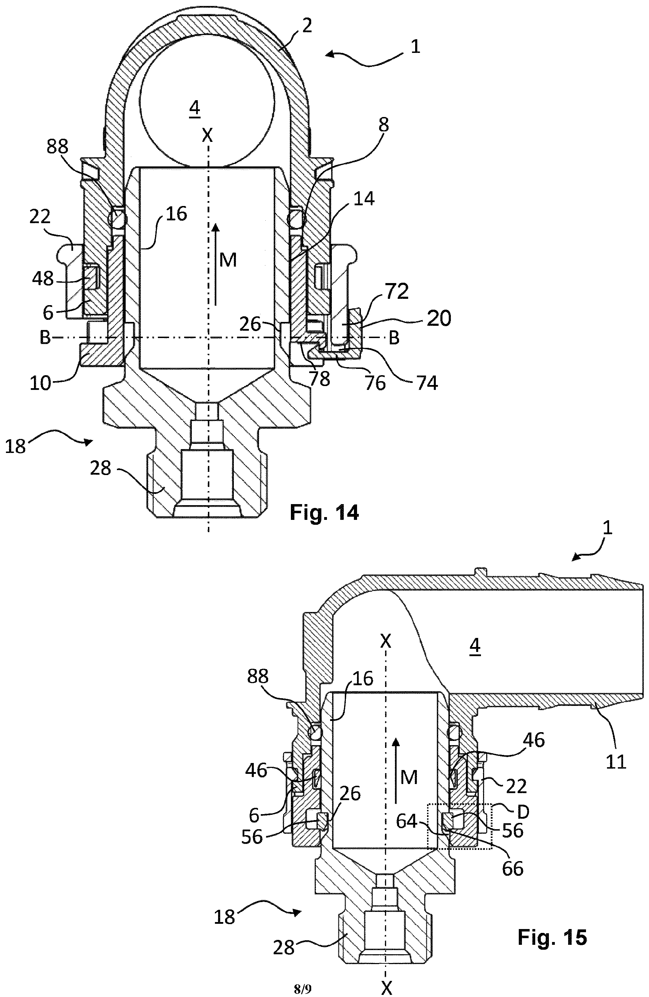

Der Steckerschaft 16 des Gegensteckverbinders 18 ist in einer Vormontagestellung des Steckverbinders 1, entsprechend der Darstellung in Figur 8, in die Durchgangsöffnung 14 der Adapterhülse 10 einführbar, und in einer, in Figur 14 bis 17 dargestellten, Montagestellung des Steckverbinders 1 blockiert das Haltemittel 20 den Gegensteckverbinder 18 axial zur Montageachse X. In den Figuren 9 bis 13 ist der Steckverbinder in zwei Zwischenstellungen mit einem jeweils teilweise eingeführten Gegensteckverbinder 18 dargestellt.

Ein in der Figur 1 dargestelltes, axial zur Montageachse X bewegliches Verriegelungselement 22 ist auf einem Außenumfang 24 des Muffenabschnitts 6 von einer das Haltemittel 20 freigebenden Lösestellung in eine das Haltemittel 20 verriegelnde Verriegelungsstellung beweglich angeordnet.

Der Gegensteckverbinder 18 weist in Montagerichtung M betrachtet vor dem Steckerschaft 16 eine Rastnut 26 auf. Vorzugsweise sind sowohl der Steckerschaft 16 als auch die Rastnut 26 zu der Montageachse X zylindrisch ausgebildet.

An dem dem Steckerschaft 16 gegenüberliegenden Ende des Gegensteckverbinders 18 ist ein Anschlussabschnitt 28 zum Anschluss einer Fluidleitung oder eines Aggregats vorgesehen.

Die Länge des Steckerschafts 16 des Gegensteckverbinders 18 ist zweckmäßig derart bemessen, dass dieser im in die Adapterhülse 10 eingesteckten Zustand, wie in Figur 15 dargestellt, sich in Montagerichtung M durch die Adapterhülse 10 hindurch bis in den Aufnahmekanal 8 des Gehäuses 2 erstreckt.

Das Verriegelungselement 22 ist in seiner Lösestellung in der Vormontagestellung des Steckverbinders 1, wie in den Figuren 8 bis 10, 12 und 13 dargestellt, auf dem Muffenabschnitt 6 zumindest axial zu der Montageachse X gegen eine Bewegung in die Verriegelungsstellung fixiert. In dieser Lösestellung ist insbesondere der Steckerschaft 16 nicht oder nur teilweise in die Durchgangsöffnung 14 in Montagerichtung M eingesteckt. Zweckmäßig wird die Überführung in die Verriegelungsstellung erst dann freigegeben, wenn der Steckerschaft 16 des Gegensteckverbinders 18 weit genug axial zur Montageachse X in Montagerichtung M bewegt wurde, insbesondere spätestens, wenn der Steckerschaft 16 des Gegensteckverbinders 18 eine Lage entsprechend der Montagestellung des Steckverbinders 1 gemäß den Figuren 14 bis 17 angenommen hat.

In der Montagestellung des Steckverbinders 1 verhindert daraufhin das Verriegelungselement 22, dass sich das Haltemittel 20 elastisch in einen Spannungszustand verformt und sich der Gegensteckverbinder 18 gegen die Montagerichtung M, insbesondere auch in Montagerichtung M, relativ zum Steckverbinder 1 bewegen kann. Insbesondere wird ein Trennen des Gegensteckverbinders 18 vom Steckverbinder 1 verhindert.

Dadurch, dass das Verriegelungselement 22 das Haltemittel 20 nicht blockieren kann, solange das Verriegelungselement 22 in der Lösestellung blockiert wird, wird vermieden, dass das Haltemittel 20 in einer Vormontagestellung ein Einführen des Steckerschafts 16 des Gegensteckverbinders 18 blockiert.

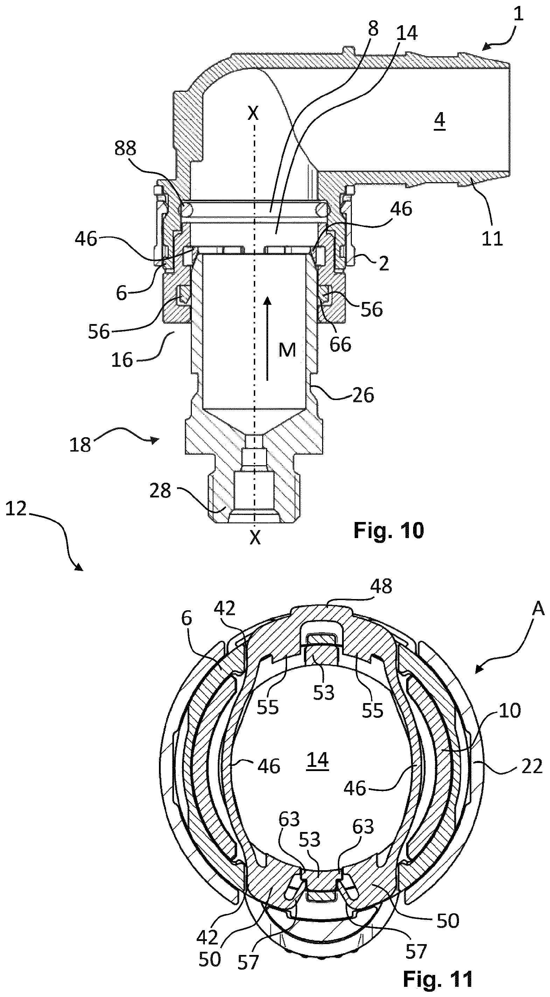

Vorzugsweise ist das Verriegelungselement 22, wie in den Figuren 1, 2 und 17 dargestellt, zylindrisch ausgebildet, wobei das Verriegelungselement 22 vorzugsweise an einer Innenwandung 32 einen Rasthaken 34 ausgebildet hat, welcher in zumindest eine korrespondierend ausgebildete Rastnut 36 am Gehäuse 2 eingreifen kann. Das Zusammenwirken des Rasthakens 34 mit der Rastnut 36 ist insbesondere in den Figuren 10, 13 und 15 dargestellt. Dadurch ist das Verriegelungselement 22 insbesondere zumindest in der Lösestellung mittels einer insbesondere kraftformschlüssig ausgebildeten Rastverbindung an dem Gehäuse 2 angeordnet. Vorzugsweise dient die Rastverbindung einer Lagesicherung für den Transport und Lagerung des Steckverbinders 1 und kann mittels einer händischen Kraft gegen die Montagerichtung M auf das Verriegelungselement 22 überwunden werden. Insbesondere weist das Verriegelungselement 22 zwei um 180 ° um die Montageachse X gegenüberliegend angeordnete Rasthaken 34 auf, wobei das Gehäuse 2 korrespondierend zu den zwei Rasthaken 34 zumindest eine Rastnut 36 für jeden Rasthaken 34 ausgebildet hat. Besonders bevorzugt weist das Gehäuse 2, wie in den Figuren 3, 10, 13 und 15 dargestellt, axial zu der Montageachse X versetzte Rastnuten 36 auf, so dass das Verriegelungselement 22 in verschiedenen Stellungen, insbesondere zumindest in der Lösestellung, rastend an dem Gehäuse 2 angeordnet werden kann.

Vorzugsweise weist das Verriegelungselement 22, wie in Figur 1 dargestellt, an seiner Innenwandung 32 axial zu der Montageachse X verlaufende Führungsnuten 38 auf. Insbesondere wenn das Verriegelungselement 22 auf dem Außenumfang 24 des Muffenabschnitts 6 angeordnet ist, greifen vorteilhaft axial zu der Montageachse X ausgebildete Leitelemente 40 in die Führungsnuten 38 des Verriegelungselements 22 ein und verhindern vorzugsweise ein Verdrehen des Verriegelungselements 22 relativ zum Muffenabschnitt 6 um die Montageachse X.

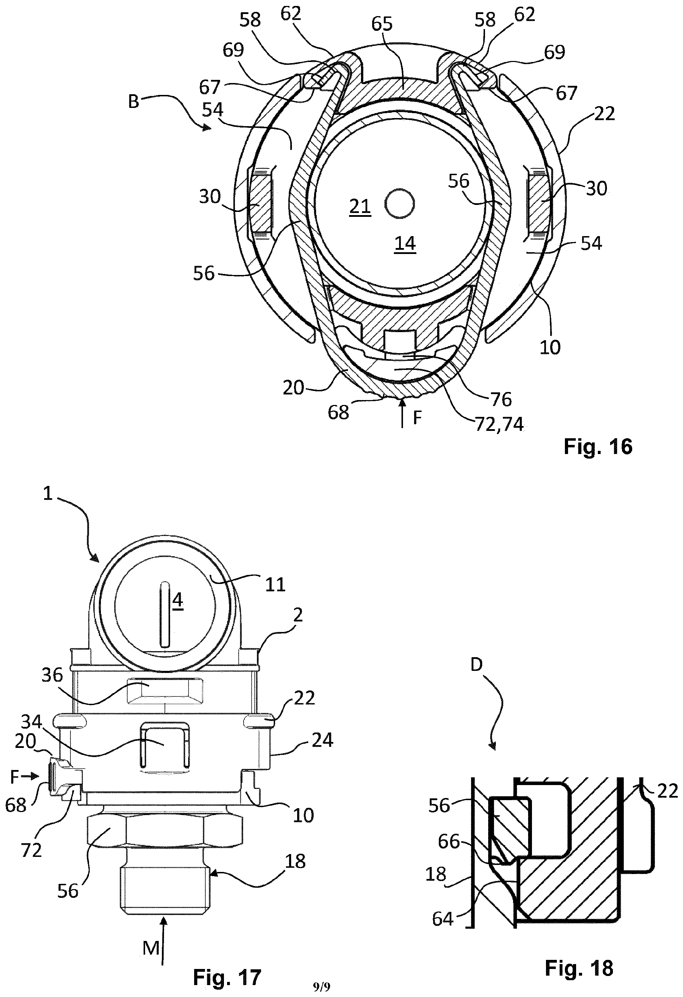

Erfindungsgemäß ist, wie in Figur 4 dargestellt, jeweils eine sich axial zur Montageachse X erstreckende Verstärkungsstrebe 30 in den Fenstern 54 angeordnet. Vorzugsweise ist die Verstärkungsstrebe 30 mittig in den Fenstern 54 angeordnet. Dabei weist in der erfindungsgemäßen Ausführung das Haltemittel 20, wie in Figur 7 dargestellt, zwei Haltearme 56 auf. Mit den Haltearmen 56 greift das Haltemittel 20 jeweils durch die Fenster 54 derart hindurch, dass im Ruhezustand die Haltearme 56 des Haltemittels 20 radial zwischen der Durchgangsöffnung 14 und den Verstärkungsstreben 30 angeordnet sind. Dadurch ragt das Haltemittel 20 mit den Haltearmen 56 zumindest in der Vormontagestellung und der Montagestellung, wie in Figur 16 dargestellt, in die Durchgangsöffnung 14 der Adapterhülse 10 hinein.

Gemäß der erfindungsgemäßen Ausführung umgreift das Haltemittel 20 durch die Fenster 54, wie beispielsweise in Figur 16 dargestellt, die Durchgangsöffnung 14. Im Ruhezustand des Haltemittels 20 ragt dabei das Haltemittel 20 vorzugsweise mit den Haltearmen 56 durch die Fenster 54 in die Durchgangsöffnung 14 der Adapterhülse 10. Insbesondere bildet das Haltemittel 20, wie in der Figur 16 dargestellt, eine Durchführungsöffnung 21 mittels der Haltearme 56 und der Adapterhülse 10. Der Umfang sowie der Flächeninhalt der Durchführungsöffnung 21 senkrecht zu der Montageachse X sind sowohl im Ruhezustand als auch im Spannungszustand gleich, so dass die radiale Aufweitung gleichzeitig auch eine zu der Aufweitung versetzte, radiale Einschnürung zur Folge hat.

In einer vorteilhaften Ausführung fixiert ein Formschlusselement 12 die Adapterhülse 10 in dem Aufnahmekanal 8 in axialer Richtung zur Montageachse X formschlüssig. Zweckmäßig ragt dabei das Formschlusselement 12 in einem Ruhezustand in die Durchgangsöffnung 14 hinein, wodurch der Querschnitt der Durchgangsöffnung 14 im Bereich des Formschlusselements 12 verringert ist. Vorzugsweise ist das Formschlusselement 12 weiterhin radial bezogen auf die Montageachse X elastisch in einen Spannungszustand aufweitbar ausgebildet.

Zweckmäßig wird eine axiale Bewegung des Verriegelungselements 22 von der Lösestellung in die Verriegelungsstellung von dem Formschlusselement 12 blockiert und erst dann freigegeben, wenn der Steckerschaft 16 des Gegensteckverbinders 18 so weit axial zur Montageachse X in Montagerichtung M bewegt wurde, dass dieser den Bereich des Formschlusselements 12 passiert hat. Dieser Zustand ist beispielhaft in Figur 12 dargestellt.

Zweckmäßig sind das Formschlusselement 12 und/oder das Haltemittel 20 mittels einer zumindest radial bezogen auf die Montageachse X nach außen wirkenden Kraft aus ihrem jeweiligen Ruhezustand in den Spannungszustand elastisch aufweitbar. Dadurch können das Haltemittel 20 und/oder das Formschlusselement 12 derart korrespondierend zu dem Steckerschaft 16 ausgebildet, insbesondere abgewinkelt, werden, dass beim Bewegen des Steckerschafts 16 in Montagerichtung M durch eine radial auf das Haltemittel 20 und/oder das Formschlusselement 12 einwirkende Kraftkomponente das Haltemittel 20 und/oder das Formschlusselement 12 in deren jeweiligen Spannungszustand elastisch aufgeweitet werden.

In einer Ausführung der Erfindung weisen der Muffenabschnitt 6 und die Adapterhülse 10 jeweils zumindest einen in Bezug auf die Montageachse X radialen Durchbruch 42 auf. Die jeweiligen radialen Durchbrüche 42 sind in den Figuren 3 und 4 dargestellt. Vorzugsweise sind zumindest jeweils ein Durchbruch 42 der Adapterhülse 10 und des Muffenabschnitts 6 in einem fixierten Zustand der Adapterhülse 10 im Muffenabschnitt 6 derart benachbart zueinander angeordnet, dass das Formschlusselement 12 radial zur Montageachse X durch die Durchbrüche 42 der Adapterhülse 10 und des Muffenabschnitts 6 in die Durchgangsöffnung 14 der Adapterhülse 10 eingeführt werden kann.

Zweckmäßig wird das Formschlusselement 12 von außerhalb des Gehäuses 2 radial zur Montageachse X in die Durchgangsöffnung 14 eingeführt. Vorzugsweise verhindert das Formschlusselement 12 sowohl eine Verdrehung der Adapterhülse 10 relativ zum Muffenabschnitt 6 um die Montageachse X als auch eine axiale Bewegung der Adapterhülse 10 entlang der Montageachse X relativ zum Muffenabschnitt 6.

Insbesondere weisen der Muffenabschnitt 6 und die Adapterhülse 10 jeweils zwei um 180 ° gegenüberliegend angeordnete, in Bezug auf die Montageachse X radiale Durchbrüche 42 auf. Das Formschlusselement 12 kann in dieser Ausführung radial zur Montageachse X durch die Durchbrüche 42 in die Durchgangsöffnung 14 des Muffenabschnitts 6 eingeführt werden, wobei das Formschlusselement 12 durch die gegenüberliegenden Durchbrüche 42 in den Muffenabschnitt 6 und die Adapterhülse 10 ragt.

Vorzugsweise sind die Durchbrüche 42 einseitig, wie in Figur 11 dargestellt, von dem Verriegelungselement 22 übergriffen, so dass das Formschlusselement 12 radial in dem übergriffenen Durchbruch 42 angeordnet werden kann und im Spannungszustand eine radiale Bewegung des Formschlusselements 12 durch den übergriffenen Durchbruch 42 mittels des Verriegelungselements 22 blockiert wird. Insbesondere kann sich das Formschlusselement 12 in dieser Ausführung an dem Verriegelungselement 22, welches einseitig die Durchbrüche 42 übergreift, abstützen.

Gemäß einer in den Figuren 1 und 4 dargestellten Ausführungsform der Adapterhülse 10 sind die radial geöffneten Fenster 54 axial zur Montageachse X von den Durchbrüchen 42 beabstandet angeordnet und zweckmäßig um 90 ° zu den Durchbrüchen 42 um die Montageachse X versetzt angeordnet.

Gemäß einer vorteilhaften Ausführung ragt das Formschlusselement 12 im Ruhezustand radial zur Montageachse X aus dem Durchbruch 42 der Adapterhülse 10 heraus. Zweckmäßig blockiert dadurch das Formschlusselement 12 im Ruhezustand die Bewegung des Verriegelungselements 22 aus der Lösestellung in die Verriegelungsstellung. Insbesondere ist dadurch das Verriegelungselement 22 in der Vormontagestellung des Steckverbinders 1, wie in Figur 8 dargestellt, oder einer Zwischenstellung des Steckverbinders 1, wie in Figur 9 dargestellt, fixiert.

Besonders vorteilhaft ist das Formschlusselement 12, wie in Figur 6 dargestellt, als Verbindungsklammer ausgebildet. Insbesondere hat das Formschlusselement 12 dabei zwei Klemmarme 46 ausgebildet. Zweckmäßig sind die Klemmarme 46 über eine Brücke 48 einseitig miteinander verbunden. Insbesondere erstrecken sich die Klemmarme 46 jeweils zu einem freien Ende, wobei die freien Enden jeweils einen Stützkörper 50 aufweisen. Vorzugsweise ragen die Klemmarme 46 im Ruhezustand des Formschlusselements 12 bzw. der Verbindungsklammer in die Durchgangsöffnung 14 hinein. Die Stützkörper 50 sind zweckmäßig, entsprechend Figur 11, in einem Durchbruch 42 in dem Muffenabschnitt 6 angeordnet und vorzugsweise einseitig, wie in Figur 11 dargestellt, von dem Verriegelungselement 22 übergriffen.

Gemäß einer bevorzugten Ausführung weisen die Durchbrüche 42 des Muffenabschnitts 6 und der Adapterhülse 10 jeweils eine sich axial zur Montageachse X erstreckende und insbesondere mittig im jeweiligen Durchbruch 42 angeordnete Stützstrebe 53 auf. Diese Ausführung ist in Bezug auf den Muffenabschnitt 6 insbesondere in Figur 3 und in Bezug auf die Adapterhülse 10 insbesondere in Figur 4 dargestellt. Hierbei ist eine erste Stützstrebe 53 zwischen den beiden Stützkörpern 50 des Formschlusselements 12 angeordnet, und eine zweite Stützstrebe 53 wird vorteilhaft von zwei Anlagekörpern 55 umgriffen. Die Anlagekörper 55 sind dabei zweckmäßig, wie in Figur 6 dargestellt, an der, die Klemmarme 46 miteinander verbindende, Brücke 48 angeordnet, insbesondere angeformt und erstrecken sich vorzugsweise radial in die Durchgangsöffnung 14. Figur 11 zeigt einen Querschnitt senkrecht zur Montageachse des Formschlusselement 12 gemäß dieser Ausführung in seiner Einbaulage im Steckverbinder.

Die in Figur 6 dargestellte Ausführungsform zeigt zudem eine weitere vorteilhafte Ausführung, gemäß welcher an den Stützkörpern 50 elastisch verformbare Schnapparme 57 ausgebildet sind. Zweckmäßig erstrecken sich die Schnapparme 57 von einer mit dem Stützkörper 50 verbundenen Anbindungsstelle mit einem Lagerende 61 in Richtung der Durchgangsöffnung 14, wobei ein in Richtung der Durchgangsöffnung 14 geöffneter Spalt zwischen den Lagerenden 61 und dem jeweiligen angebundenen Stützkörper 50 ausgebildet ist. Wie in Figur 11 dargestellt ist, sind die Lagerenden 61 vorzugsweise gegen eine Haltegeometrie 63 der ersten Stützstrebe 53 radial in Richtung der Durchgangsöffnung 14 abstützend angeordnet. Die Schnapparme 57 sichern, insbesondere zusammen mit dem Verriegelungselement 22, die Position des Formschlusselements 12 innerhalb des Muffenabschnitts 6 bzw. der Adapterhülse 10. Vorteilhaft dienen dabei die Stützstreben 53 der Versteifung des Steckverbinders und synergetisch der Sicherung des Formschlusselements 12 in radialer Richtung zur Durchgangsöffnung 14.

Gemäß einer vorteilhaften Ausführung der Erfindung, wie in der Figur 6 dargestellt, sind an den Stützkörpern 50 Abstützelemente 51, zweckmäßig monolithisch angeformt, angeordnet. Die Abstützelemente 51 ragen vorteilhaft in die Durchgangsöffnung 14 hinein und können sich insbesondere in einer Montagestellung oder einer Zwischenstellung an dem Steckerschaft 16 des Gegensteckverbinders 18 abstützen. Vorteilhaft begünstigen die Abstützelemente 51, dass das Formschlusselement 12 bei einer radialen Aufweitung der Klemmarme 46 lediglich mit seiner Brücke 48 radial zu der Montageachse X und relativ zum Muffenabschnitt 6 in Richtung der Montageachse X elastisch verformt wird. Vorzugsweise bleibt die relative Lage der Stützkörper 50 mittels der Abstützelemente 51 zum Muffenabschnitt 6 und/oder zum Gegensteckverbinder 18 vor und nach einer Aufweitung der Klemmarme, d. h. sowohl im Ruhezustand als auch im Spannungszustand des Formschlusselements 12, konstant.

Vorzugsweise sind die Klemmarme 46 derart geformt, dass diese in einem eingebauten Zustand, siehe Figur 11, um die Montageachse X gebogen ausgebildet sind. Die gebogene Form begünstigt, dass der Steckerschaft 16 beim Einstecken in Montagerichtung M eine vergrößerte Auflagefläche mit den Klemmarmen 46 besitzt. Dadurch wird vorteilhaft die radiale elastische Aufweitung der Klemmarme 46 begünstigt.

Weiterhin kann vorteilhaft die im eingebauten Zustand gegen die Montagerichtung M weisende Seite der Klemmarme 46, wie in Figur 6 dargestellt, zumindest teilweise mit einer Abschrägung 59 ausgebildet sein, wobei sich der radiale Abstand der Klemmarme 46 über die Abschrägung 59 in Montagerichtung M verringert. Die Abschrägung 59 erleichtert ein Einführen des Steckerschafts 16 und verbessert eine Kraftumlenkung beim Einführen in Montagerichtung M, indem eine axial wirkende Kraftkomponente mittels der Abschrägung 59 in eine radial zu der Montageachse X nach außen und gegen eine Elastizitätskraft der Klemmarme 46 wirkende Kraft umgelenkt wird.

Insbesondere im Spannungszustand des Formschlusselements 12 verringert sich der Abstand zwischen der Brücke 48 und den Stützkörpern 50. Vorteilhaft wird dabei das Formschlusselement 12 vollständig mit dem Außenumfang der Adapterhülse 10 fluchtend in den Durchbruch 42 hineingezogen. Vorteilhaft hat diese Ausführung zur Folge, dass das Verriegelungselement 22 durch den Spannungszustand des Formschlusselements 12 für ein axiales Verschieben freigegeben wird.

Insbesondere ist die radial wirkende Elastizitätskraft der Klemmarme 46 derart ausgeprägt, dass, wenn der Steckerschaft 16 aus einem eingesteckten Zustand gegen die Montagerichtung M aus der Durchgangsöffnung 14 der Adapterhülse 10 gezogen wird, sich die Klemmarme 46 zurückverformen und den Querschnitt der Durchgangsöffnung 14 der Adapterhülse 10 wieder verringern. Mittels der Rückverformung der Klemmarme 46 vergrößert sich des Weiteren der Abstand zwischen der Brücke 48 und den Stützkörpern 50, so dass die Brücke 48 aus dem Durchbruch 42 in dem Muffenabschnitt 6 herausragt und das Verriegelungselement 22 in der Lösestellung blockiert.

Zweckmäßig weist der Steckerschaft 16 des Gegensteckverbinders 18 einen Durchmesser DS auf, siehe Figur 8, welcher größer ist als der größte Abstand LS der Haltearme 56 senkrecht durch die Montageachse X im Ruhezustand der Haltearme 56, siehe Figur 7. Insbesondere ist eine radial wirkende Elastizitätskraft der Haltearme 56 in Richtung der Montageachse X derart ausgeprägt, dass, wenn der Gegensteckverbinder 18 so weit in Einsteckrichtung in die Durchgangsöffnung 14 der Adapterhülse 10 eingeführt ist, dass die Rastnut 26, wie in den Figuren 15 und 16 dargestellt, benachbart zu den Haltearmen 56 angeordnet ist, die Haltearme 56 sich zurückverformen und wieder in die Durchgangsöffnung 14 der Adapterhülse 10 hineinragen. Dadurch ordnen sich die Haltearme 56 in der Rastnut 26 an und blockieren eine Bewegung des Gegensteckverbinders 18 in und/oder gegen die Montageachse X.

Die Haltearme 56 weisen vorzugsweise jeweils an ihrem freien Ende einen Kontaktabschnitt 58 auf. Insbesondere sind die Kontaktabschnitte 58 in jeweils einer korrespondierend ausgebildeten Kontaktnut 60 angeordnet. Die Kontaktnuten 60, vorzugsweise zwei Kontaktnuten 60, sind dabei zweckmäßig von jeweils einem Kontaktelement 62 gebildet. Besonders vorteilhaft sind die Kontaktelemente 62 an einem, die Fenster 54 voneinander trennenden Wandabschnitt 65 der Adapterhülse 10 ausgebildet. Die Kontaktelemente 62 sind insbesondere in den Figuren 5 und 16 dargestellt.

Von besonderem Vorteil sind die Kontaktnuten 60 gemäß einer Variante der Erfindung in Richtung der Durchgangsöffnung 14 am Innenumfang am Innenumfang, wie in den Figuren 5 und 16 dargestellt, geöffnet ausgebildet. Zweckmäßig können sich die Haltearme 56 mit ihren Kontaktabschnitten 58 in den Kontaktnuten 60 radial zur Montageachse X abstützen. Besonders vorteilhaft können sich dadurch die Haltearme 56 in den Kontaktnuten 60 radial zur Montageachse X abstützen und einhaken und werden dadurch in einer Einbaulage in bzw. an der Adapterhülse 10 gehalten. Zweckmäßig bleibt die relative Lage der Kontaktabschnitte 58 mittels der Kontaktnuten 60, wie in der Figur 16 dargestellt, vor und nach einer Aufweitung der Haltearme 56, d. h. sowohl im Ruhezustand als auch im Spannungszustand des Haltemittels 20, konstant.

Gemäß einer weiteren Ausführung haben die Kontaktnuten 60 jeweils einen Rastzahn 67 ausgebildet. Entsprechend der in Figur 7 dargestellten vorteilhaften Ausführung weisen dabei die Kontaktabschnitte 58 jeweils einen elastischen Federarm 69 auf, wobei zweckmäßig jeweils zwischen dem Federarm 69 und dem Haltearm 56 ein sich in Umfangsrichtung erstreckender Spalt ausgebildet ist. Insbesondere sind die Kontaktabschnitte 58 derart in den Kontaktnuten 60 angeordnet, dass die Federarme jeweils korrespondierend mit einem Rastzahn 67 verrasten. Die Rastverbindung ermöglicht sowohl, dass sich die Haltearme 56 radial zur Montageachse X in den Kontaktnuten 60 abstützen können, als auch, dass ein Trennen und Herausfallen des Haltemittels 20 aus der Adapterhülse 10 vermieden wird.

Vorzugsweise sind die Haltearme 56, wie auch insbesondere die Klemmarme 46, derart geformt, dass diese in einem eingebauten Zustand, siehe die Figur 16, um die Montageachse X gebogen ausgebildet sind. Die gebogene Form begünstigt, wie auch zu den Klemmarmen 46 beschrieben, dass der Steckerschaft 16 beim Einstecken in Montagerichtung M eine vergrößerte Auflagefläche mit den Haltearmen 56 besitzt. Dadurch wird vorteilhaft die radiale elastische Verformung der Haltearme 56 begünstigt. Weiterhin hat die um die Montageachse X gebogene Form der Haltearme 56 den Vorteil, dass in einem Montagezustand mit vollständig eingestecktem und von dem Haltemittel 20 fixiertem Gegensteckverbinder 18 einem ungewollten Lösen, insbesondere bei Vibrationen, besser vorgebeugt wird.

Entsprechend der Ausführung des Formschlusselements 12 kann die im eingebauten Zustand gegen die Montagerichtung M weisende Seite der Haltearme 56 zumindest teilweise, wie in Figur 7 dargestellt, mit einer Abschrägung 59 ausgebildet sein. Wie beschrieben, wird dadurch ein Einführen des Gegensteckverbinders 18 und das radiale Aufweiten der Haltearme 56 verbessert.

Vorteilhaft steht das Haltemittel 20 radial zur Montageachse X mit einem Betätigungsmittel 68, wie in der Figur 2 dargestellt, von einem Außenumfang 70 der Adapterhülse 10 ab. Insbesondere ist der maximale radiale Abstand des Betätigungsmittels 68 zu einem Außenumfang 70 der Adapterhülse 10 im Ruhezustand größer als im Spannungszustand.

Gemäß einer bevorzugten Ausführung kann durch eine von außen radial zu der Montageachse X auf das Betätigungsmittel 68 wirkende, in Figur 16 gekennzeichnete, Kraft F das Haltemittel 20 aus dem Ruhezustand in den aufgeweiteten Spannungszustand elastisch verformt werden. Dafür ist das Betätigungsmittel 68 gegenüberliegend zu den Kontaktnuten 60 vorzugsweise derart angeordnet, dass die Kontaktnuten 60 in einer Ebene des Kraftflusses der Kraft F liegt. Insbesondere stützt sich das Haltemittel 20 durch die radial auf das Betätigungsmittel 68 wirkende Kraft F mit den Kontaktabschnitten 58 in den Kontaktnuten 60 ab. Dabei wird das Haltemittel 20 zwischen den Kontaktabschnitten 58 und dem Betätigungsmittel 68 gestaucht. Zweckmäßig ist der radiale Abstand zwischen den Haltearmen 56 im Spannungszustand bzw. im gestauchten Zustand mindestens so groß wie der Durchmesser DS des Steckerschafts 16. Dies ermöglicht entsprechend Figur 16, dass, wenn sich im Montagezustand das Haltemittel 20 im Ruhezustand befindet und in der Rastnut 26 des Gegensteckverbinders 18 angeordnet ist und den Gegensteckverbinder 18 fixiert, die axiale Bewegung des Gegensteckverbinders 18 zu der Montageachse X aktiv von außen mittels der radialen Kraft F freigegeben werden kann.

In den Figuren 10, 13, 15 und 18 ist eine optionale Druckverriegelung zur Vermeidung eines unbeabsichtigten Lösens des Gegensteckverbinders dargestellt. Zu diesem Zweck hat das Haltemittel 20, insbesondere die Haltearme 56, gegen die Montagerichtung M weisend zumindest eine Riegelnase 66 ausgebildet. Die Riegelnase 66 stützt sich in der Montagestellung an einer Innenwandung 64 der Adapterhülse 10 ab. Insbesondere ist diese Ausführung in der Figur 18 zu erkennen. Die Riegelnase 66 verhindert, dass sich die Haltearme 56 radial zur Montageachse X verformen können und dadurch den Steckerschaft 16 des Gegensteckverbinders

18 freigeben. Weiterhin verhindern die Riegelnasen 66, dass lediglich die von außen auf das Betätigungsmittel 68 aufgebrachte radiale Kraft F nicht ausreicht, um die Haltearme 56 radial zu verformen. Insbesondere im Betrieb wird durch den in dem Steckverbinder herrschenden Innendruck der Gegensteckverbinder gegen die Montagerichtung M und dadurch gegen das Haltemittel 20 gedrückt. Um die Haltearme 56 elastisch zu verformen, muss in einem ersten Schritt die Verriegelung der Riegelnase 66 freigegeben werden. Dies ist zweckmäßig dadurch möglich, dass der Gegensteckverbinder mindestens um die axiale Länge der Riegelnase 66 in Montagerichtung M geschoben wird, so dass die Haltearme 56 mit den Riegelnasen 66 sich elastisch in die Fenster 54 verformen können.

Vorteilhaft bewirkt die Verringerung des Abstands zwischen den Kontaktabschnitten 58 und dem Betätigungsmittel 68 im Spannungszustand des Haltemittels 20 eine Verringerung des radialen Abstands des Betätigungsmittels 68 zum Außenumfang 70 der Adapterhülse 10, da das Haltemittel 20 einseitig mit den Kontaktabschnitten 58 in den Kontaktnuten 60 geklemmt angeordnet ist. Dadurch hat der Monteur eine Kontrollmöglichkeit über den Montagezustand des Steckverbinders 1.

Insbesondere wird die Sicherheit und Einsteckkontrolle dadurch verbessert, dass das Haltemittel 20 im Spannungszustand insbesondere mit dem Betätigungsmittel 68 die Bewegung des Verriegelungselements 22 von der Lösestellung in die Verriegelungsstellung blockiert. Solange sich das Haltemittel 20 im Spannungszustand befindet, ist der Gegensteckverbinder 18 nicht weit genug in Montagerichtung M in die Durchgangsöffnung 14 der Adapterhülse 10 eingeführt, und der Steckverbinder 1 befindet sich, entsprechend den Figuren 10 bis 12, noch in einer Zwischenstellung.

In der Zwischenstellung des Steckverbinders 1 ist insbesondere das Halteelement 20 und/oder das Formschlusselement 12 derart radial aufgeweitet, dass die Bewegung des Verriegelungselements 22 in die Verriegelungsstellung von dem Halteelement 20 und/oder dem Formschlusselement 12 blockiert wird. Insbesondere ist das Formschlusselement 12 derart radial aufgeweitet, dass es die Bewegung des Verriegelungselements 22 in die Verriegelungsstellung nicht blockiert, wobei das Haltemittel 20 allerdings insbesondere noch an dem Steckerschaft 16 des Gegensteckverbinders 18 anliegt und sich im Spannungszustand befindet. Das hat zur Folge, dass das Verriegelungselement 22 nicht endgültig in die Verriegelungsstellung überführt werden kann.

Gemäß einer Ausführung der Erfindung greift das Verriegelungselement 22 mit mindestens einem axial von dem Verriegelungselement 22 gegen die Montagerichtung M hervorstehenden Dorn 72 im Montagezustand in einen Freiraum 74 hinein. Der Freiraum 74 ist zweckmäßig axial zwischen dem Betätigungsmittel 68 und der Adapterhülse 10 durchführend ausgebildet. Das Verriegelungselement 22 bzw. der Dorn 72, welcher in einer vorteilhaften Ausführung in Figur 1 dargestellt ist, weist insbesondere zwei gegen die Montagerichtung M hervorstehende Zähne auf. Der Freiraum 74 ist beispielhaft in Figur 16 gekennzeichnet, wobei in Figur 16 auch der in den Freiraum 74 ragende Dorn 72 dargestellt ist. Das Verriegelungselement 22 fixiert, wenn der Dorn 72 in den Freiraum 74 greift, das Haltemittel 20 radial zu der Montageachse X im Ruhezustand.

Insbesondere ist der Freiraum 74 derart abhängig von dem Spannungszustand bzw. Ruhezustand des Haltemittels 20 ausgebildet, dass das Verriegelungselement 22 mit dem Dorn 72 lediglich in den Freiraum 74 eingreifen kann, wenn das Haltemittel 20, wie in den Figuren 14 und 16 dargestellt, im Ruhezustand, und der Gegensteckverbinder 18 vollständig in der Durchgangsöffnung 14 der Adapterhülse 10 eingesteckt ist. Aus der genannten Ausführung ergibt sich für den Monteur eine zusätzliche Steckkontrolle und die Gefahr der Fehlmontage wird verringert.

In einer weiteren Ausführung weist das Haltemittel 20 ein Führungsmittel 76, wie in Figur 7 dargestellt, auf. Das Führungsmittel 76 hat zweckmäßig eine senkrecht zur Montageachse X radial von der Durchgangsöffnung 14 nach außen weisende Haltestufe 77 ausgebildet, welche derart mit einer an der Adapterhülse 10 ausgebildeten Führungsnut 78 zusammenwirkt, dass zumindest in der Vormontagestellung das Haltemittel 20 radial von der Durchgangsöffnung 14 abweisend blockiert ist. Besonders vorteilhaft teilt das Führungsmittel 76 den Freiraum 74 in zwei Teilräume, wobei zweckmäßig der Dorn 72 mit seinen zwei Zähnen in der Montagestellung das Führungsmittel 76 umgreift. Vorzugsweise ist das Führungsmittel 76 als eine radial zu der Montageachse X weisende Zunge, wie in Figur 7 dargestellt, am Betätigungsmittel 68 ausgebildet.

Wie in Figur 8 dargestellt, ist der Aufnahmekanal 8 des Muffenabschnitts 6 vorteilhaft in zylindrische Abschnitte unterteilt, wobei die Durchmesser der jeweiligen Abschnitte gegen die Montagerichtung M zunehmen.

Insbesondere weist der Aufnahmekanal 8 eine ringförmige erste Stufenfläche 84 zwischen einem ersten und einem zweiten zylindrischen Abschnitt auf. Zweckmäßig dient diese erste Stufenfläche 84 als eine Einsteckbegrenzung, welche die Einstecktiefe der Adapterhülse 10 in Montagerichtung M begrenzt. Hierbei weist die Adapterhülse 10 insbesondere eine ebenfalls ringförmige und korrespondierend zu der Stufenfläche ausgebildete Auflagefläche 86 auf, welche in die Montagerichtung M weist. Im eingesetzten Zustand der Adapterhülse 10 in den Aufnahmekanal 8 liegt die Adapterhülse 10 mit der Auflagefläche 86 auf der ersten Stufenfläche 84 auf.

Besonders vorteilhaft ist, wie in der Figur 8 abgebildet, in dem Aufnahmekanal 8 mindestens ein Dichtungselement 88, insbesondere ein O-Ring, angeordnet. Vorzugsweise sind zwei Dichtungselemente 88 in dem Aufnahmekanal 8 angeordnet. Das Dichtungselement 88 ist zweckmäßig zwischen einer in Montagerichtung M weisenden Seitenwand 90 der Adapterhülse 10 und einer gegen die Montagerichtung M weisenden und sich senkrecht von einer Innenwandung 44 des Aufnahmekanals 8 erstreckenden zweiten Stufenfläche 92 angeordnet. Vorteilhaft dichtet das Dichtungselement 88 gegen eine Innenwandung 44 des Aufnahmekanals 8 ab.

Gemäß einer vorteilhaften Ausführung reduziert die zweite Stufenfläche 92 den Durchmesser des Aufnahmekanals 8 auf den Durchmesser der Durchgangsöffnung 14 der Adapterhülse 10.

Besonders vorteilhaft dient das Dichtungselement 88 einer umfangsgemäßen Abdichtung des Steckerschafts gegenüber dem Muffenabschnitt 6 bzw. der Innenwandung 44 des Aufnahmekanals 8.

Als besonders vorteilhaft hat sich eine, nicht dargestellte, dreiteilige Dichtung erwiesen. Die Dichtung weist demnach vorteilhaft zwei Dichtungselemente 88, insbesondere O-Ringe, auf, welche mit einem Distanzring voneinander getrennt sind. Dieser dreiteilige Verbund wird entsprechend der zuvor genannten Art in der Durchgangsöffnung 14 montiert.

Nachfolgend wird ein bevorzugter Einsteckvorgang des Gegensteckverbinders 18 und die Stellungen des Steckverbinders 1 anhand der Figuren 8 bis 17 zusammenfassend erläutert.

In der Vormontagestellung ist der Gegensteckverbinder 18, wie in Figur 8 dargestellt, noch nicht derart weit in Montagerichtung M in die Durchgangsöffnung 14 eingeführt, dass der Steckerschaft 16 in Kontakt mit dem Haltemittel 20 gelangt. Sowohl das Haltemittel 20 als auch das Formschlusselement 12 befinden sich daher im Ruhezustand. Das Verriegelungselement 22 ist in der Lösestellung und wird von der einseitig aus dem Durchbruch 42 ragenden Brücke 48 des Formschlusselements 12 gegen eine Bewegung in die Verriegelungsstellung blockiert. Anderseitig stützt sich das Formschlusselement 12 mit den Stützkörpern 50 an dem Verriegelungselement 22, insbesondere am Dorn 72, ab. Das Halteelement 20 steht dabei mit dem Betätigungsmittel 68 mit einem derart radialen Abstand zum Außenumfang 70 der Adapterhülse 10 ab, dass der Freiraum 74 geöffnet ist.

In einer Zwischenstellung des Steckverbinders 1, welche in den Figuren 9 bis 11 dargestellt ist, ist der Gegensteckverbinder 18 in Montagerichtung M bis in den Bereich des Haltemittels 20 teileingesteckt. Das Haltemittel 20 befindet sich dabei durch den Steckerschaft 16 in einem radial aufgeweiteten Spannungszustand. Der Betätigungsabschnitt 68 des Haltemittels 12 ist radial eingezogen, wodurch der Freiraum 74 für ein Eindringen des Dorns 72 geschlossen ist. Das Formschlusselement 12 befindet sich derweil weiterhin im Ruhezustand und blockiert das Verriegelungselement 22 weiterhin in der Lösestellung.

In einer weiteren Zwischenstellung des Steckverbinders 1, welche in den Figuren 12 und 13 dargestellt ist, ist der Gegensteckverbinder 18 weiter in Montagerichtung M bis in den Bereich des Formschlusselements 12 teileingesteckt. Das Formschlusselement 12 ist dabei von dem Steckerschaft 16 in den Spannungszustand radial aufgeweitet. Dabei stützt sich das Formschlusselement 12 einseitig insbesondere mit den Abstützelementen 51 am Steckerschaft 16 ab, wodurch die Brücke 48 vollständig mit dem Außenumfang der Adapterhülse 10 fluchtend in den Durchbruch 42 hineingezogen ist. Die axiale Verschiebung des Verriegelungselements 22 von der Lösestellung in die Verriegelungsstellung ist dabei vorzugsweise weiterhin nicht oder insbesondere nur geringfügig möglich. Das Haltemittel 20 befindet sich weiterhin, wie zuvor beschrieben, in dem radial aufgeweiteten Spannungszustand. Der Freiraum 74 ist daher für ein Eindringen des Dorns 72 geschlossen. Der Dorn 72 liegt vorzugsweise weiterhin an dem Betätigungsmittel 68 an oder kommt bei einer axialen Verschiebung des Verriegelungselements 22 an dem Betätigungsmittel 68 zur Anlage, wodurch in beiden Fällen ein weiteres Verschieben in die Verriegelungsstellung blockiert ist.

In den Figuren 14 bis 17 ist die Montagestellung des Steckverbinders 1 dargestellt. Dabei ist der Gegensteckverbinder 18 vollständig und montagerichtig in die Montagerichtung M eingesteckt. Das Formschlusselement 12 befindet sich weiterhin im Spannungszustand, und die Blockade des Formschlusselements 12 für das Verriegelungselement 22 ist aufgehoben. Die Rastnut 26 des Gegensteckverbinder 18 befindet sich nun im Bereich des Haltemittels 20, wodurch dieses wiederum elastisch zurück in den Ruhezustand übergegangen ist und in die Rastnut 26 ragt. Der Gegensteckverbinder 18 ist dadurch gegen ein axiales Verschieben gesichert. Durch die Ruhstellung des Haltemittels 20 hat sich der radiale Abstand des Betätigungsmittels 68 zum Außenumfang 70 der Adapterhülse 10 erneut vergrößert, wodurch die Blockade für das Verriegelungselement 22 wieder aufgehoben wird.

Das Verriegelungselement 22 kann daher vollständig axial zur Montageachse X in die Verriegelungsstellung verschoben werden und mit dem Dorn 72 in die Freiräume 74 eintauchen. In dieser Montagestellung blockiert das Verriegelungselement 22 das Haltemittel 20 am Betätigungsmittel 68 gegen radiales Verschieben und somit gegen ungewolltes Aufweiten in den Spannungszustand des Haltemittels 20.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Steckverbinder
- 2: Gehäuse
- 4: Durchgangskanal
- 6: Muffenabschnitt
- 8: Aufnahmekanal
- 10: Adapterhülse
- 11: Steckabschnitt
- 12: Formschlusselement/Verbindungsklammer
- 13: Durchleitungsöffnung
- 14: Durchgangsöffnung
- 16: Steckerschaft
- 18: Gegensteckverbinder
- 20: Haltemittel
- 21: Durchführungsöffnung
- 22: Verriegelungselement
- 24: Außenumfang des Muffenabschnitts
- 26: Rastnut des Gegensteckverbinders
- 28: Anschlussabschnitt
- 30: Verstärkungsstrebe
- 32: Innenwandung des Verriegelungselements
- 34: Rasthaken
- 36: Rastnut am Gehäuse
- 38: Führungsnut
- 40: Leitelement
- 42: Durchbruch
- 44: Innenwandung des Aufnahmekanals
- 46: Klemmarm
- 48: Brücke
- 50: Stützkörper
- 51: Abstützelement
- 53: Stützstreben
- 54: Fenster
- 55: Anlagekörper
- 56: Haltearm
- 57: Schnapparm
- 58: Kontaktabschnitt
- 59: Abschrägung
- 60: Kontaktnut
- 61: Lagerenden
- 62: Kontaktelement
- 63: Haltegeometrie
- 64: Innenwandung der Adapterhülse
- 65: Wandabschnitt
- 66: Riegelnase
- 67: Rastzahn
- 68: Betätigungsmittel
- 69: Federarm
- 70: Außenumfang der Adapterhülse72 Dorn
- 74: Freiraum
- 76: Führungsmittel
- 77: Haltestufe
- 78: Führungsnut
- 80: Stift
- 82: Stirnfläche des Muffenabschnitts
- 84: Erste Stufenfläche
- 86: Auflagefläche
- 88: Dichtungselement
- 90: Seitenwand der Adapterhülse
- 92: Zweite Stufenfläche

- F: Auf das Haltemittel wirkende Kraft
- M: Montagerichtung
- X: Montageachse

- DS: Durchmesser des Steckerschafts
- LS: Abstand der Haltearme

## Patentansprüche

1. Steckverbinder (1) zum Verbinden von einer ersten Fluidleitung mit einem Gegensteckverbinder (18), umfassend ein Gehäuse (2) mit einem Durchgangskanal (4), wobei ein Ende des Gehäuses (2) als Muffenabschnitt (6) mit einem fluidisch mit dem Durchgangskanal (4) verbundenen Aufnahmekanal (8) zur Aufnahme einer zum Steckverbinder (1) gehörenden Adapterhülse (10) ausgebildet ist.
wobei die Adapterhülse (10) in eine axial zu einer Montageachse (X) gerichtete Montagerichtung (M) in den Aufnahmekanal (8) des Muffenabschnitts (6) einsteckbar ist und lösbar in dem Aufnahmekanal (8) in axialer Richtung formschlüssig gehalten ist, wobei die Adapterhülse (10) eine Durchgangsöffnung (14) für einen Steckerschaft (16) des Gegensteckverbinders (18) ausgebildet hat und ein Haltemittel (20) zum lösbaren Fixieren des Gegensteckverbinders (18) aufweist, wobei das Haltemittel (20) in einem Ruhezustand in die Durchgangsöffnung (14) hineinragt und radial bezogen auf die Montageachse (X) elastisch in einen Spannungszustand aufweitbar ausgebildet ist, und der Steckerschaft (16) des Gegensteckverbinders (18) in einer Vormontagestellung des Steckverbinders (1) in die Durchgangsöffnung (14) der Adapterhülse (10) einführbar ist und in einer Montagestellung des Steckverbinders (1) das Haltemittel (20) den Gegensteckverbinder (18) axial zur Montageachse (X) blockieren kann, wobei die Adapterhülse (10) zwei sich um 180 ° gegenüberliegende, in Bezug auf die Montageachse (X) radial geöffnete Fenster (54) aufweist, und ein axial zur Montageachse (X) bewegliches Verriegelungselement (22) auf einem Außenumfang (24) des Muffenabschnitts (6) von einer das Haltemittel (20) freigebenden Lösestellung in eine das Haltemittel (20) verriegelnde Verriegelungsstellung beweglich angeordnet ist, wobei das Verriegelungselement (22) in seiner Lösestellung in der Vormontagestellung des Steckverbinders (1) auf dem Muffenabschnitt (6) zumindest axial gegen eine Bewegung in die Verriegelungsstellung fixiert ist,
wobei jeweils eine sich axial zur Montageachse (X) erstreckende Verstärkungsstrebe (30) in den Fenstern (54) angeordnet ist, wobei das Haltemittel (20) zwei Haltearme (56) aufweist und mit den Haltearmen (56) jeweils durch die Fenster (54) derart hindurchgreift, dass im Ruhezustand die Haltearme (56) des Haltemittels (20) radial zwischen der Durchgangsöffnung (14) und den Verstärkungsstreben (30) angeordnet sind, so dass das Haltemittel (20) mit den Haltearmen (56) zumindest in der Vormontagestellung in die Durchgangsöffnung (14) der Adapterhülse (10) hineinragt.

2. Steckverbinder (1) nach Anspruch 1,
**dadurch gekennzeichnet, dass** ein Formschlusselement (12) die Adapterhülse (10) in dem Aufnahmekanal (8) in axialer Richtung zur Montageachse (X) formschlüssig fixiert und in einem Ruhezustand in die Durchgangsöffnung (14) hineinragt und radial bezogen auf die Montageachse (X) elastisch in einen Spannungszustand aufweitbar ausgebildet ist.

3. Steckverbinder (1) nach Anspruch 2,
**dadurch gekennzeichnet, dass** der Muffenabschnitt (6) und die Adapterhülse (10) jeweils zumindest einen in Bezug auf die Montageachse (X) radialen Durchbruch (42) aufweisen, wobei zumindest jeweils ein Durchbruch (42) der Adapterhülse (10) und des Muffenabschnitts (6) in einem fixierten Zustand der Adapterhülse (10) im Muffenabschnitt (6) derart benachbart zueinander angeordnet sind, dass das Formschlusselement (12) radial zur Montageachse (X) durch die Durchbrüche (42) der Adapterhülse (10) und des Muffenabschnitts (6) hindurch in die Durchgangsöffnung (14) der Adapterhülse (10) eingeführt werden kann.

4. Steckverbinder (1) nach Anspruch 3,
**dadurch gekennzeichnet, dass** die radial geöffneten Fenster (54) axial zur Montageachse (X) von den Durchbrüchen (42) beabstandet angeordnet und insbesondere um 90 ° zu den Durchbrüchen (42) um die Montageachse (X) versetzt angeordnet sind.

5. Steckverbinder (1) nach Anspruch 3 oder 4,
**dadurch gekennzeichnet, dass** das Formschlusselement (12) im Ruhezustand radial zur Montageachse (X) derart aus dem Durchbruch (42) der Adapterhülse (10) herausragt, dass das Formschlusselement (12) im Ruhezustand die Bewegung des Verriegelungselements (22) aus der Lösestellung in die Verriegelungsstellung blockiert.

6. Steckverbinder (1) nach einem der Ansprüche 2 bis 5,
**dadurch gekennzeichnet, dass** das Formschlusselement (12) als Verbindungsklammer ausgebildet ist und zwei Klemmarme (46) ausgebildet hat, welche im Ruhezustand in die Durchgangsöffnung (14) hineinragen, wobei die Klemmarme (46) einseitig über eine Brücke (48) verbunden sind und sich jeweils zu einem freien Ende erstrecken, wobei die freien Enden jeweils einen Stützkörper (50) aufweisen, welcher in einem Durchbruch (42) in dem Muffenabschnitt (6) angeordnet und einseitig von dem Verriegelungselement (22) übergriffen ist.

7. Steckverbinder (1) nach Anspruch 6,
**dadurch gekennzeichnet, dass** die Durchbrüche (42) des Muffenabschnitt (6) und der Adapterhülse (10) jeweils eine sich axial zur Montageachse (X) erstreckende und im jeweiligen Durchbruch angeordnete Stützstrebe (53) aufweisen, wobei eine erste Stützstrebe (53) zwischen den beiden Stützkörpern (50) des Formschlusselements (12) angeordnet ist und die zweite Stützstrebe (53) von zwei Anlagekörpern (55) umgriffen wird, die an der, die Klemmarme (46) miteinander verbindenden, Brücke (48) angeordnet sind und sich radial in die Durchgangsöffnung (14) erstrecken.

8. Steckverbinder (1) nach Anspruch 7,
**dadurch gekennzeichnet, dass** an den Stützkörpern (50) elastisch verformbare Schnapparme (57) ausgebildet sind, wobei die Schnapparme (57) von einer mit dem Stützkörper (50) verbundenen Anbindungsstelle sich mit einem Lagerende (61) in Richtung der Durchgangsöffnung (14) erstrecken, wobei ein in Richtung der Durchgangsöffnung (14) geöffneter Spalt zwischen den Lagerenden (61) und dem jeweiligen angebundenen Stützkörper (50) ausgebildet ist, und die Lagerenden (61) gegen eine Haltegeometrie (63) der ersten Stützstrebe (53) radial in Richtung der Durchgangsöffnung (14) abstützend angeordnet sind.

9. Steckverbinder (1) nach einem der Ansprüche 6 bis 8,
**dadurch gekennzeichnet, dass** an den Stützkörpern (50) Abstützelemente (51) angeordnet sind, welche in die Durchgangsöffnung (14) hineinragen und sich insbesondere in einer Montagestellung an dem Steckerschaft (16) des Gegensteckverbinders (18) abstützen können.

10. Steckverbinder (1) nach einem der Ansprüche 1 bis 9,
**dadurch gekennzeichnet, dass** die Haltearme (56) jeweils an ihrem freien Ende einen Kontaktabschnitt (58) aufweisen, wobei die Kontaktabschnitte (58) in jeweils einer korrespondierend ausgebildeten Kontaktnut (60) angeordnet sind, wobei die Kontaktnuten (60) von jeweils einem Kontaktelement (62) gebildet sind, welches an einem, die Fenster (54) voneinander trennenden, Wandabschnitt (65) der Adapterhülse (10) ausgebildet ist.

11. Steckverbinder (1) nach Anspruch 10,
**dadurch gekennzeichnet, dass** die Kontaktnuten (60) in Richtung der Durchgangsöffnung (14) am Innenumfang geöffnet ausgebildet sind, wobei die Haltearme (56) sich mit ihren Kontaktabschnitten (58) in den Kontaktnuten (60) radial zur Montageachse (X) abstützen können.

12. Steckverbinder (1) nach Anspruch 11,
**dadurch gekennzeichnet, dass** die Kontaktnuten (60) jeweils einen Rastzahn (67) ausgebildet haben, wobei die Kontaktabschnitte (58) jeweils einen elastischen Federarm (69) aufweisen, wobei jeweils zwischen dem Federarm (69) und dem Haltearm (56) ein sich in Umfangsrichtung erstreckender Spalt ausgebildet ist, und die Kontaktabschnitte (58) derart in den Kontaktnuten (60) angeordnet sind, dass die Federarme (69) jeweils korrespondierend mit einem Rastzahn (67) verrasten.

13. Steckverbinder (1) nach einem der Ansprüche 1 bis 12,
**dadurch gekennzeichnet, dass** das Haltemittel (20), insbesondere die Haltearme (56), gegen die Montagerichtung (M) weisend zumindest eine Riegelnase (66) ausgebildet hat, welche sich in der Montagestellung an einer Innenwandung (64) der Adapterhülse (10) abstützt.

14. Steckverbinder (1) nach einem der Ansprüche 1 bis 13,
**dadurch gekennzeichnet, dass** das Haltemittel (20) radial zur Montageachse (X) mit einem Betätigungsmittel (68) von einem Außenumfang (70) der Adapterhülse (10) absteht, wobei der maximale radiale Abstand des Betätigungsmittels (68) zu einem Außenumfang (70) der Adapterhülse (10) im Ruhezustand größer ist als im Spannungszustand.

15. Steckverbinder (1) nach Anspruch 14,
**dadurch gekennzeichnet, dass** durch eine von außen radial auf das Betätigungsmittel (68) wirkende Kraft (F) das Haltemittel (20) aus dem Ruhezustand in den aufgeweiteten Spannungszustand elastisch verformt werden kann, wobei das Betätigungsmittel (68) gegenüberliegend zu der Kontaktnut (60) angeordnet ist, und sich das Haltemittel (20) radial zur Montageachse (X) mit den Kontaktabschnitten (58) in den Kontaktnuten (60) abstützt.

16. Steckverbinder (1) nach einem der Ansprüche 1 bis 15,
**dadurch gekennzeichnet, dass** das Haltemittel (20) im Spannungszustand, insbesondere mit dem Betätigungsmittel (68), die Bewegung des Verriegelungselements (22) von der Lösestellung in die Verriegelungsstellung blockiert.

17. Steckverbinder (1) nach Anspruch 15 oder 16,
**dadurch gekennzeichnet, dass** das Verriegelungselement (22) mit mindestens einem axial von dem Verriegelungselement (22) gegen die Montagerichtung (M) hervorstehenden Dorn (72) in einem Montagezustand durch einen axial zwischen dem Betätigungsmittel (68) des Haltemittels (20) und der Adapterhülse (10) führenden Freiraum (74) hineingreift, wobei das Verriegelungselement (22) das Haltemittel (20) radial zu der Montageachse (X) im Ruhezustand fixiert.

18. Steckverbinder (1) nach einem der Ansprüche 1 bis 17,
**dadurch gekennzeichnet, dass** das Haltemittel (20) ein Führungsmittel (76) aufweist, welches eine senkrecht zur Montageachse (X) radial von der Durchgangsöffnung (14) nach außen weisende Haltestufe (77) ausgebildet hat, welche derart mit einer an der Adapterhülse (10) ausgebildeten Führungsnut (78) zusammenwirkt, dass zumindest in der Vormontagestellung das Haltemittel (20) radial von der Durchgangsöffnung (14) abweisend blockiert ist.

## Claims

1. Plug-in connector (1) for connecting a first fluid line to a mating plug-in connector (18), comprising a housing (2) having a passage duct (4), wherein one end of the housing (2) is in the form of a ferrule portion (6) with a receiving duct (8), which is fluidically connected to the passage duct (4), for receiving an adapter sleeve (10) belonging to the plug-in connector (1),
wherein the adapter sleeve (10) can be inserted into the receiving duct (8) of the ferrule portion (6) in a fitting direction (M) directed axially to a fitting axis (X) and is releaseably held in the receiving duct (8) in a form-fitting manner in the axial direction, wherein the adapter sleeve (10) has formed a passage opening (14) for a plug shank (16) of the mating plug-in connector (18) and has a holding means (20) for releaseably securing the mating plug-in connector (18), wherein the holding means (20), in an inoperative state, protrudes into the passage opening (14) and is designed to elastically expand into a tensioned state radially with respect to the fitting axis (X), and the plug shank (16) of the mating plug-in connector (18) can be inserted into the passage opening (14) of the adapter sleeve (10) in a pre-fitting position of the plug-in connector (1) and the holding means (20) can block the mating plug-in connector (18) axially with respect to the fitting axis (X) in a fitting position of the plug-in connector (1), wherein the adapter sleeve (10) has two windows (54) which are situated opposite each other at an 180° angle and are radially open with respect to the fitting axis (X), and a locking element (22) which is movable axially with respect to the fitting axis (X) is arranged on an outer circumference (24) of the ferrule portion (6) in a manner movable from a release position, in which the holding means (20) is released, to a locking position, in which the holding means (20) is locked, wherein the locking element (22), in its release position in the pre-fitting position of the plug-in connector (1) on the ferrule portion (6), is secured at least axially against movement to the locking position,
wherein a reinforcing strut (30) extending axially with respect to the fitting axis (X) is arranged in each of the windows (54), wherein the holding means (20) has two holding arms (56) and by way of the holding arms (56) passes through the windows (54) in such a way that, in the inoperative state, the holding arms (56) of the holding means (20) are arranged radially between the passage opening (14) and the reinforcing struts (30), so that the holding means (20), by way of the holding arms (56), protrudes into the passage opening (14) of the adapter sleeve (10) at least in the pre-fitting position.

2. Plug-in connector (1) according to Claim 1, **characterized in that** a form-fitting element (12) secures the adapter sleeve (10) in the receiving channel (8) in the axial direction with respect to the fitting axis (X) in a form-fitting manner and, in an inoperative state, protrudes into the passage opening (14) and is designed to elastically expand into a tensioned state radially with respect to the fitting axis (X).

3. Plug-in connector (1) according to Claim 2, **characterized in that** the ferrule portion (6) and the adapter sleeve (10) each have at least one radial aperture (42) with respect to the fitting axis (X), wherein at least one aperture (42) of the adapter sleeve (10) and of the ferrule portion (6) in each case are arranged adjacent to each other in a secured state of the adapter sleeve (10) in the ferrule portion (6) in such a way that the form-fitting element (12) can be inserted into the passage opening (14) of the adapter sleeve (10) through the apertures (42) of the adapter sleeve (10) and the ferrule portion (6) radially with respect to the fitting axis (X).

4. Plug-in connector (1) according to Claim 3, **characterized in that** the radially opened windows (54) are arranged spaced apart from the apertures (42) axially with respect to the fitting axis (X) and in particular are arranged offset through 90° with respect to the apertures (42) about the fitting axis (X).

5. Plug-in connector (1) according to Claim 3 or 4, **characterized in that** the form-fitting element (12), in the inoperative state, protrudes from the aperture (42) of the adapter sleeve (10) radially with respect to the fitting axis (X) in such a way that the form-fitting element (12), in the inoperative state, blocks the movement of the locking element (22) from the release position to the locking position.

6. Plug-in connector (1) according to any of Claims 2 to 5,
**characterized in that** the form-fitting element (12) is in the form of a connecting clamp and has formed two clamping arms (46) which, in the inoperative state, protrude into the passage opening (14), wherein the clamping arms (46) are connected via a bridge (48) on one side and each extend to a free end, wherein the free ends each have a supporting body (50), which is arranged in an aperture (42) in the ferrule portion (6) and is overlapped by the locking element (22) on one side.

7. Plug-in connector (1) according to Claim 6, **characterized in that** the apertures (42) of the ferrule portion (6) and of the adapter sleeve (10) each have a supporting strut (53) which extends axially with respect to the fitting axis (X) and is arranged in the respective aperture, wherein a first supporting strut (53) is arranged between the two supporting bodies (50) of the form-fitting element (12) and the second supporting strut (53) is surrounded by two bearing bodies (55), which are arranged on the bridge (48) connecting the clamping arms (46) to each other and extend radially into the passage opening (14).

8. Plug-in connector (1) according to Claim 7, **characterized in that** elastically deformable snap-action arms (57) are formed on the supporting bodies (50), wherein the snap-action arms (57) extend from an attachment point connected to the supporting body (50) by way of a bearing end (61) in the direction of the passage opening (14), wherein a gap which is open in the direction of the passage opening (14) is formed between the bearing ends (61) and the respective attached supporting body (50), and the bearing ends (61) are arranged radially supported against a holding geometry (63) of the first supporting strut (53) radially in the direction of the passage opening (14).

9. Plug-in connector (1) according to any of Claims 6 to 8,
**characterized in that** support elements (51) are arranged on the supporting bodies (50) and protrude into the passage opening (14) and, in particular in a fitting position, can be supported on the plug shank (16) of the mating plug-in connector (18).

10. Plug-in connector (1) according to any of Claims 1 to 9,
**characterized in that** the holding arms (56) each have a contact portion (58) at their free end, wherein the contact portions (58) are each arranged in a correspondingly formed contact groove (60), wherein the contact grooves (60) are each formed by a contact element (62) which is formed on a wall portion (65) of the adapter sleeve (10), the wall portion separating the windows (54) from each other.

11. Plug-in connector (1) according to Claim 10, **characterized in that** the contact grooves (60) are formed to be open at the inner circumference in the direction of the passage opening (14), wherein the holding arms (56) can be supported by way of their contact portions (58) in the contact grooves (60) radially with respect to the fitting axis (X).

12. Plug-in connector (1) according to Claim 11, **characterized in that** the contact grooves (60) have each formed a latching tooth (67), wherein the contact portions (58) each have an elastic spring arm (69), wherein a gap extending in the circumferential direction is formed between the spring arm (69) and the holding arm (56), and the contact portions (58) are arranged in the contact grooves (60) in such a way that the spring arms (69) each correspondingly latch with a latching tooth (67).

13. Plug-in connector (1) according to any of Claims 1 to 12,
**characterized in that** the holding means (20), in particular the holding arms (56), has/have formed at least one locking lug (66) which faces against the fitting direction (M) and is supported on an inner wall (64) of the adapter sleeve (10) in the fitting position.

14. Plug-in connector (1) according to any of Claims 1 to 13,
**characterized in that** the holding means (20) protrude by way of an actuating means (68) from an outer circumference (70) of the adapter sleeve (10) radially with respect to the mounting axis (X), wherein the maximum radial distance between the actuating means (68) and an outer circumference (70) of the adapter sleeve (10) is greater in the inoperative state than in the tensioned state.

15. Plug-in connector (1) according to Claim 14, **characterized in that** the holding means (20) can be elastically deformed from the inoperative state to the expanded tensioned state by a force (F) acting radially on the actuating means (68) from the outside, wherein the actuating means (68) is arranged opposite the contact groove (60), and the holding means (20) is supported by way of the contact portions (58) in the contact grooves (60) radially with respect to the fitting axis (X).

16. Plug-in connector (1) according to any of Claims 1 to 15,
**characterized in that** the holding means (20) blocks the movement of the locking element (22) from the release position to the locking position in the tensioned state, in particular by way of the actuating means (68).

17. Plug-in connector (1) according to Claim 15 or 16, **characterized in that** the locking element (22) engages by way of at least one mandrel (72), which protrudes axially from the locking element (22) against the fitting direction (M), through a clearance (74) leading axially between the actuating means (68) of the holding means (20) and the adapter sleeve (10) in a fitted state, wherein the locking element (22) secures the holding means (20) radially with respect to the fitting axis (X) in the inoperative state.

18. Plug-in connector (1) according to any of Claims 1 to 17,
**characterized in that** the holding means (20) has a guide means (76), which has formed a holding step (77) which faces outwards radially from the passage opening (14) perpendicularly to the fitting axis (X) and interacts with a guide groove (78) formed on the adapter sleeve (10) in such a way that the holding means (20) is blocked in a manner facing away radially from the passage opening (14) at least in the pre-fitting position.

## Revendications

1. Raccord mâle (1) permettant de raccorder une première conduite de fluide à un raccord complémentaire (18), comprenant un boîtier (2) avec un canal de passage (4), une extrémité du boîtier (2) étant conçue sous la forme d'une partie manchon (6) dotée d'un canal de réception (8) relié fluidiquement au canal de passage (4) pour recevoir un manchon adaptateur (10) appartenant au raccord mâle (1),
le manchon adaptateur (10) pouvant être inséré dans le canal de réception (8) de la partie manchon (6) dans une direction de montage (M) orientée axialement par rapport à un axe de montage (X) et étant maintenu de manière amovible par complémentarité de forme dans le canal de réception (8) dans la direction axiale, le manchon adaptateur (10) comportant une ouverture de passage (14) pour une tige de fiche (16) du raccord complémentaire (18) et un moyen de maintien (20) pour fixer de manière amovible le raccord complémentaire (18), le moyen de maintien (20) faisant saillie dans l'ouverture de passage (14) dans un état inopérant et étant conçu pour s'élargir élastiquement dans un état de tension radialement par rapport à l'axe de montage (X), et la tige de fiche (16) du raccord complémentaire (18) pouvant être introduite dans l'ouverture de passage (14) du manchon adaptateur (10) dans une position de pré-montage du raccord mâle (1), et dans une position de montage du raccord mâle (1), le moyen de maintien (20) pouvant bloquer le raccord complémentaire (18) axialement par rapport à l'axe de montage (X), le manchon adaptateur (10) comportant deux fenêtres (54) situées à l'opposé l'une de l'autre à un angle e 180° et ouvertes radialement par rapport à l'axe de montage (X), et un élément de verrouillage (22), mobile axialement par rapport à l'axe de montage (X), étant disposé sur une circonférence extérieure (24) de la partie manchon (6) de manière à pouvoir être déplacé d'une position de libération, dans laquelle le moyen de maintien (20) est libéré, à une position de verrouillage dans laquelle le moyen de maintien (20) est verrouillé, l'élément de verrouillage (22) étant, dans sa position de libération dans la position de pré-montage du raccord mâle (1) sur la partie manchon (6), fixe au moins axialement contre le mouvement vers la position de verrouillage,
une barre de renfort (30) qui s'étend axialement par rapport à l'axe de montage (X) étant disposée dans les fenêtres (54) respectives, le moyen de maintien (20) comportant deux bras de maintien (56) et passant respectivement à travers les fenêtres (54) avec les bras de maintien (56) de telle sorte qu'à l'état inopérant, les bras de maintien (56) du moyen de maintien (20) sont disposés radialement entre l'ouverture de passage (14) et les barres de renfort (30), de sorte que le moyen de maintien (20) fait saillie dans l'ouverture de passage (14) du manchon adaptateur (10) avec les bras de maintien (56) au moins dans la position de pré-montage.

2. Raccord mâle (1) selon la revendication 1, **caractérisé en ce qu'**un élément de complémentarité de forme (12) fixe par complémentarité de forme le manchon adaptateur (10) dans le canal de réception (8) dans la direction axiale par rapport à l'axe de montage (X) et fait saillie dans l'ouverture de passage (14) dans un état inopérant et est conçu pour s'élargir élastiquement radialement par rapport à l'axe de montage (X) dans un état de tension.

3. Raccord mâle (1) selon la revendication 2, **caractérisé en ce que** la partie manchon (6) et le manchon adaptateur (10) comportent respectivement au moins une traversée (42) radiale par rapport à l'axe de montage (X), au moins une traversée (42) du manchon adaptateur (10) et une traversée de la partie manchon (6) étant respectivement disposées de manière adjacente l'une à l'autre dans un état fixé du manchon adaptateur (10) dans la partie manchon (6) de telle sorte que l'élément de complémentarité de forme (12) peut être introduit radialement par rapport à l'axe de montage (X) à travers les traversées (42) du manchon adaptateur (10) et de la partie manchon (6) dans l'ouverture de passage (14) du manchon adaptateur (10).

4. Raccord mâle (1) selon la revendication 3, **caractérisé en ce que** les fenêtres (54) ouvertes radialement sont disposées de manière espacée axialement par rapport à l'axe de montage (X) des traversées (42) et sont notamment décalées de 90° par rapport aux traversées (42) autour de l'axe de montage (X).

5. Raccord mâle (1) selon la revendication 3 ou 4, **caractérisé en ce que** l'élément de complémentarité de forme (12), dans l'état inopérant, fait saillie radialement par rapport à l'axe de montage (X) hors de la traversée (42) du manchon adaptateur (10), de telle sorte que, dans l'état inopérant, l'élément de complémentarité de forme (12) bloque le mouvement de l'élément de verrouillage (22) de la position de libération à la position de verrouillage.

6. Raccord mâle (1) selon l'une quelconque des revendications 2 à 5,
**caractérisé en ce que** l'élément de complémentarité de forme (12) est conçu sous forme de pince de liaison et comporte deux bras de serrage (46) qui font saillie dans l'ouverture de passage (14) dans l'état inopérant, les bras de serrage (46) étant raccordés d'un côté par un pont (48) et s'étendant respectivement vers une extrémité libre, les extrémités libres comportant respectivement un corps de support (50) qui est disposé dans une traversée (42) dans la partie manchon (6) et est recouvert d'un côté par l'élément de verrouillage (22).

7. Raccord mâle (1) selon la revendication 6, **caractérisé en ce que** les traversées (42) de la partie manchon (6) et du manchon adaptateur (10) comportent respectivement une barre de support (53) s'étendant axialement par rapport à l'axe de montage (X) et disposée dans l'ouverture respective, une première barre de support (53) étant disposée entre les deux corps de support (50) de l'élément de complémentarité de forme (12) et la deuxième barre de support (53) étant entourée par deux corps d'appui (55) qui sont disposés sur le pont (48) reliant entre eux les bras de serrage (46) et s'étendent radialement dans l'ouverture de passage (14).

8. Raccord mâle (1) selon la revendication 7, **caractérisé en ce que** des bras d'encliquetage (57) déformables élastiquement sont formés sur les corps de support (50), les bras d'encliquetage (57) s'étendant à partir d'un point de liaison raccordé au corps de support (50) par une extrémité de palier (61) en direction de l'ouverture de passage (14), un espace ouvert en direction de l'ouverture de passage (14) étant formé entre les extrémités de logement (61) et le corps de support (50) respectif raccordé, et les extrémités de paliers (61) étant disposées de manière à s'appuyer radialement en direction de l'ouverture de passage (14) contre une géométrie de maintien (63) de la première barre de support (53).

9. Raccord mâle (1) selon l'une quelconque des revendications 6 à 8,
**caractérisé en ce que** des éléments d'appui (51) sont disposés sur les corps de support (50), lesquels font saillie dans l'ouverture de passage (14) et peuvent notamment s'appuyer contre la tige de fiche (16) du raccord complémentaire (18) dans une position de montage.

10. Raccord mâle (1) selon l'une quelconque des revendications 1 à 9,
**caractérisé en ce que** les bras de maintien (56) comportent respectivement à leur extrémité libre une partie de contact (58), les parties de contact (58) étant respectivement disposées dans une rainure de contact (60) formée de manière correspondante, les rainures de contact (60) étant respectivement formées par un élément de contact (62) qui est réalisé sur une partie de paroi (65) du manchon adaptateur (10) séparant les fenêtres (54) l'une de l'autre.

11. Raccord mâle (1) selon la revendication 10, **caractérisé en ce que** les rainures de contact (60) sont réalisées de manière à être ouvertes sur la circonférence intérieure en direction de l'ouverture de passage (14), les bras de maintien (56) pouvant s'appuyer radialement par rapport à l'axe de montage (X) avec leurs parties de contact (58) dans les rainures de contact (60).

12. Raccord mâle (1) selon la revendication 11, **caractérisé en ce que** les rainures de contact (60) comportent respectivement une dent d'encliquetage (67), les parties de contact (58) comportant respectivement un bras de ressort élastique (69), un espace s'étendant dans la direction circonférentielle étant respectivement formé entre le bras de ressort élastique (69) et le bras de maintien (56), et les parties de contact (58) étant disposées dans les rainures de contact (60) de telle sorte que les bras de ressort élastiques (69) s'enclenchent respectivement de manière correspondante au moyen d'une dent d'encliquetage (67).

13. Raccord mâle (1) selon l'une quelconque des revendications 1 à 12,
**caractérisé en ce que** le moyen de maintien (20), notamment les bras de maintien (56), comporte au moins un ergot de verrouillage (66) qui fait face à la direction de montage (M), lequel s'appuie, dans la position de montage, contre une paroi intérieure (64) du manchon adaptateur (10).

14. Raccord mâle (1) selon l'une quelconque des revendications 1 à 13,
**caractérisé en ce que** le moyen de maintien (20) dépasse radialement par rapport à l'axe de montage (X) par un moyen d'actionnement (68) à partir d'une circonférence extérieure (70) du manchon adaptateur (10), la distance radiale maximale du moyen d'actionnement (68) par rapport à une circonférence extérieure (70) du manchon adaptateur (10) étant plus grande dans l'état inopérant que dans l'état de tension.

15. Raccord mâle (1) selon la revendication 14, **caractérisé en ce que** le moyen de maintien (20) peut être déformé élastiquement de l'état inopérant à l'état de tension élargi par une force (F) agissant radialement depuis l'extérieur sur le moyen d'actionnement (68), le moyen d'actionnement (68) étant disposé à l'opposé de la rainure de contact (60), et le moyen de maintien (20) s'appuyant radialement par rapport à l'axe de montage (X) avec les parties de contact (58) dans les rainures de contact (60).

16. Raccord mâle (1) selon l'une quelconque des revendications 1 à 15,
**caractérisé en ce que** le moyen de maintien (20), dans l'état de tension, notamment à l'aide du moyen d'actionnement (68), bloque le mouvement de l'élément de verrouillage (22) de la position de libération à la position de verrouillage.

17. Raccord mâle (1) selon la revendication 15 ou 16, **caractérisé en ce que** l'élément de verrouillage (22), dans un état de montage, s'engage dans un espace libre (74) passant axialement entre le moyen d'actionnement (68) du moyen de maintien (20) et le manchon adaptateur (10) au moyen d'au moins un mandrin (72) faisant saillie axialement par rapport à l'élément de verrouillage (22) à l'opposé de la direction de montage (M), l'élément de verrouillage (22), dans l'état inopérant, fixant le moyen de maintien (20) radialement par rapport à l'axe de montage (X).

18. Raccord mâle (1) selon l'une quelconque des revendications 1 à 17,
**caractérisé en ce que** le moyen de maintien (20) comporte un moyen de guidage (76) qui présente un gradin de maintien (77) orienté radialement vers l'extérieur de l'ouverture de passage (14) perpendiculairement à l'axe de montage (X), lequel coopère avec une rainure de guidage (78) formée sur le manchon adaptateur (10) de telle sorte qu'au moins dans la position de pré-montage, le moyen de maintien (20) est bloqué radialement vers l'extérieur de l'ouverture de passage (14).
